# EUROPEAN PATENT APPLICATION

(11) **EP 4 492 213 A1**
(43) Date of publication of application: **15.01.2025**
(21) Application number: 23850291.8
(22) Date of filing: 18.07.2023
(51) Int. Cl.: G06F 3/04842, G06F 3/04817, G06F 3/01, G06F 1/16, G06F 3/00, G06T 19/00, G06T 19/20, G06F 3/04815, G06F 3/0484

(54) **WEARABLE ELECTRONIC DEVICE FOR DISPLAYING VIRTUAL OBJECT AND CONTROL METHOD THEREFOR**

(30) Priority: 04.08.2022 KR 20220097321; 28.10.2022 KR 20220141395
(71) Applicant: Samsung Electronics Co., Ltd, Suwon-si, Gyeonggi-do 16677 (KR)
(72) Inventor: KIM, Kyunghwa, Suwon-si Gyeonggi-do 16677 (KR); YOO, Sanga, Suwon-si Gyeonggi-do 16677 (KR); KIM, Sunho, Suwon-si Gyeonggi-do 16677 (KR); WOO, Minseoung, Suwon-si Gyeonggi-do 16677 (KR); LEE, Hyunjun, Suwon-si Gyeonggi-do 16677 (KR)
(74) Representative: HGF
(86) International application number: PCT/KR2023/010262
(87) International publication number: WO 2024/029784

(57) **Abstract**

A wearable electronic device may comprise a display, a camera, and at least one processor operatively connected to the display, the camera, and at least one sensor, wherein the at least one processor: analyzes a real space on the basis of an image obtained through the camera; obtains a plurality of regions in which a virtual object can be displayed, on the basis of a result of analysis of the real space; on the basis that a first user input for displaying the virtual object is received, identifies a shape of a first region among the plurality of regions; identifies a first shape of the virtual object corresponding to the shape of the first region; identifies at least one function associated with the virtual object and corresponding to the shape of the first region; and displays the first shape of the virtual object including at least one icon corresponding to the at least one function.

## Description

### [TECHNICAL FIELD]

Various embodiments of the disclosure relate to a wearable electronic device displaying a virtual object and a method for controlling the same.

### [BACKGROUND ART]

Recently, additional services and functions are being provided through electronic devices, e.g., smartphones, or other portable electronic devices. To meet the needs of various users and increase user efficiency of electronic devices, communication service carriers or device manufacturers are jumping into competitions to develop electronic devices with differentiated and diversified functionalities. Accordingly, various functions that are provided through electronic devices are increasingly evolving.

Further, the electronic device provides various graphic user interfaces (GUIs) for interaction with the user through the display.

In particular, with the development of electronics and communication technologies, electronic devices may come in a more compact and lightweight form factor to be worn on the user's body without discomfort. For example, commercially available wearable electronic devices include head-mounted devices (HMDs), smart watches (or bands), contact lens-type devices, ring-type devices, glove-type devices, shoe-type devices, or clothing-type devices. Since the wearable electronic device is directly worn on the user's body, more portability and user accessibility may be obtained.

The head mounting-type electronic device is a device that may be used while being worn on the user's head or face and may provide augmented reality (AR) to the user. For example, a glasses-type head mounting device may provide augmented reality information regarding objects in the form of images or texts to the user in at least a partial space of the user's field of view.

### [DISCLOSURE]

### [MEANS TO ADDRESS THE PROBLEMS]

According to an aspect of the disclosure, a wearable electronic device is provided. The wearable electronic device includes a display, a camera, and at least one processor operatively connected with the display and the camera.

According to an embodiment, the at least one processor may analyze, based on an image obtained through the camera, a real space, based on a result of the analyzed real space.

According to an embodiment, the at least one processor may obtain a plurality of areas where a virtual object is displayable, based on receiving a first user input for displaying the virtual object, identify a shape of a first area among the plurality of areas.

According to an embodiment, the at least one processor may identify a first shape of a virtual object corresponding to the shape of the first area.

According to an embodiment, the at least one processor may identify at least one function related to the virtual object and corresponding to the shape of the first area.

According to an embodiment, the at least one processor may display the virtual object of the first shape comprising at least one icon corresponding to the at least one function.

According to an embodiment, the at least one processor may replace, based on receiving a second user input to move the virtual object of the first shape to a second area that is different from the first area, the virtual object of the first shape displayed in the first area with a virtual object of a second shape that is different from the first shape and corresponding to a shape of the second area.

According to an embodiment, the at least one of one or more icons included in the virtual object of the second shape or type of a function corresponding to the virtual object of the second shape is different from that of the virtual object of the first shape.

According to an embodiment, the icon corresponding to a first function included in the virtual object of the first shape may be a 2D icon.

According to an embodiment, the icon corresponding to the first function included in the virtual object of the second shape may be a 3D icon.

According to an embodiment, the at least one processor may add, based on receiving a third user input for adding the icon related to a second function to the virtual object of the first shape, a 2D icon related to the second function to the virtual object of the first shape.

According to an embodiment, the at least one processor may add, based on receiving a fourth user input for adding the icon related to the second function to the virtual object of the second shape, a 3D icon related to the second function to the virtual object of the second shape.

According to an embodiment, the at least one processor may replace, based on approach of the virtual object of the first shape from the first area to the second area through the second user input, the virtual object of the first shape with the virtual object of the second shape.

According to an embodiment, the at least one processor may fix, based on the second user input being completed, the virtual object of the second shape in the second area.

According to an embodiment, the at least one processor may display, based on approach of the virtual object of the first shape from the first area to around the second area through the second user input, a virtual object indicating that a virtual object is fixable in the second area .

According to an embodiment, the at least one processor may automatically align, based on a virtual object related to a second application, that is different from a first application corresponding to the virtual object of the first shape, approaching the virtual object of the first shape in a state that the virtual object of the first shape is displayed, the virtual object corresponding to the second application in an area around the virtual object of the first shape.

According to an embodiment, the at least one processor may display a virtual object indicating that the virtual object of the first shape and the aligned virtual object corresponding to the second application are grouped.

According to an embodiment, the first area may have a bottom shape, a wall shape, or an in-air shape.

According to an embodiment, the second area may have a shape different from the first area.

According to an aspect of the disclosure, a method for controlling a wearable electronic device, includes analyzing, based on an image obtained through a camera, a real space.

According to an embodiment, the method may include obtaining, based on a result of the analyzing, a plurality of areas where a virtual object is displayable.

According to an embodiment, the method may include identifying, based on receiving a first user input for displaying a virtual object, a shape of a first area among the plurality of areas.

According to an embodiment, the method may include identifying a first shape of a virtual object corresponding to the shape of the first area.

According to an embodiment, the method may include identifying at least one function related to the virtual object and corresponding to the shape of the first area.

According to an embodiment, the method may include displaying the virtual object of the first shape including at least one icon respectively corresponding to the at least one function.

According to an embodiment, the method may further include replacing, based on receiving a second user input to move the virtual object of the first shape to the second area different from the first area, the virtual object of the first shape displayed in the first area with a virtual object of a second shape different from the first shape and corresponding to a shape of a second area .

According to an embodiment, the method may include wherein at least one of one or more icons included in the virtual object of the second shape or type of a function corresponding to the virtual object of the second shape is different from that of the virtual object of the first shape.

According to an embodiment, the icon corresponding to a first function included in the virtual object of the first shape may be a 2D icon.

According to an embodiment, the icon corresponding to the first function included in the virtual object of the second shape may be a 3D icon.

According to an embodiment, the method may further include adding, based on receiving a third user input for adding the icon related to the second function to the virtual object of the first shape, a 2D icon related to a second function to the virtual object of the first shape.

According to an embodiment, the method may further include adding, based on receiving a fourth user input for adding the icon related to the second function to the virtual object of the second shape, a 3D icon related to the second function to the virtual object of the second shape.

According to an embodiment, the replacing with the virtual object of the second shape different from the first shape further including, based on approach of the virtual object of the first shape from the first area to around the second area through the second user input, replacing the virtual object of the first shape with the virtual object of the second shape.

According to an embodiment, the replacing with the virtual object of the second shape different from the first shape further including, based on the second user input being completed, fixing the virtual object of the second shape in the second area.

According to an embodiment, the method may further include, based on approach of the virtual object of the first shape from the first area to around the second area through the second user input, displaying a virtual object indicating that a virtual object is fixable in the second area.

According to an embodiment, the method may further include, based on a virtual object related to a second application, that is different from a first application related to the virtual object of the first shape, approaching the virtual object of the first shape in a state that the virtual object of the first shape is displayed, automatically aligning the virtual object corresponding to the second application in an area around the virtual object of the first shape.

According to an embodiment, the method may further include displaying a virtual object indicating that the virtual object of the first shape and the aligned virtual object corresponding to the second application are grouped.

According to an embodiment, the first area may have a bottom shape, a wall shape, or an in-air shape.

According to an embodiment, the second area may have a shape that is different from the shape of the first area.

According to an embodiment, in a non-transitory computer-readable recording medium storing one or more programs, the one or more programs may include instructions that enable a wearable electronic device to analyze, based on an image obtained through the camera, a real space, based on a result of the analyzed real space.

According to an embodiment, the one or more programs may include instructions that enable a wearable electronic device to obtain a plurality of areas where a virtual object is displayable, based on receiving a first user input for displaying the virtual object, identify a shape of a first area among the plurality of areas.

According to an embodiment, the one or more programs may include instructions that enable a wearable electronic device to identify a first shape of a virtual object corresponding to the shape of the first area.

According to an embodiment, the one or more programs may include instructions that enable a wearable electronic device to at least one function related to the virtual object and corresponding to the shape of the first area.

According to an embodiment, the one or more programs may include instructions that enable a wearable electronic device to display the virtual object of the first shape comprising at least one icon corresponding to the at least one function.

According to an embodiment, the one or more programs may include instructions that enable a wearable electronic device to replace, based on receiving a second user input to move the virtual object of the first shape to a second area that is different from the first area, the virtual object of the first shape displayed in the first area with a virtual object of a second shape that is different from the first shape and corresponding to a shape of the second area.

According to an embodiment, the at least one of one or more icons included in the virtual object of the second shape or type of a function corresponding to the virtual object of the second shape is different from that of the virtual object of the first shape.

According to an embodiment, the icon corresponding to a first function included in the virtual object of the first shape may be a 2D icon.

According to an embodiment, the icon corresponding to the first function included in the virtual object of the second shape may be a 3D icon.

According to an embodiment, the one or more programs may include instructions that enable a wearable electronic device to add, based on receiving a third user input for adding the icon related to a second function to the virtual object of the first shape, a 2D icon related to the second function to the virtual object of the first shape.

According to an embodiment, the one or more programs may include instructions that enable a wearable electronic device to add, based on receiving a fourth user input for adding the icon related to the second function to the virtual object of the second shape, a 3D icon related to the second function to the virtual object of the second shape.

According to an embodiment, the one or more programs may include instructions that enable a wearable electronic device to replace, based on approach of the virtual object of the first shape from the first area to the second area through the second user input, the virtual object of the first shape with the virtual object of the second shape.

According to an embodiment, the one or more programs may include instructions that enable a wearable electronic device to fix, based on the second user input being completed, the virtual object of the second shape in the second area.

According to an embodiment, the one or more programs may include instructions that enable a wearable electronic device to display, based on approach of the virtual object of the first shape from the first area to around the second area through the second user input, a virtual object indicating that a virtual object is fixable in the second area.

According to an embodiment, the one or more programs may include instructions that enable a wearable electronic device to automatically align, based on a virtual object related to a second application, that is different from a first application corresponding to the virtual object of the first shape, approaching the virtual object of the first shape in a state that the virtual object of the first shape is displayed, the virtual object corresponding to the second application in an area around the virtual object of the first shape.

According to an embodiment, the one or more programs may include instructions that enable a wearable electronic device to display a virtual object indicating that the virtual object of the first shape and the aligned virtual object corresponding to the second application are grouped.

According to an embodiment, the first area may have a bottom shape, a wall shape, or an in-air shape.

According to an embodiment, the second area may have a shape different from the first area.

Additional embodiments will be set forth in part in the description which follows and, in part, will be apparent from the description, or may be learned by practice of the presented embodiments.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating an electronic device in a network environment according to an embodiment;
FIG. 2 is a perspective view illustrating an electronic device according to an embodiment;
FIG. 3 is a first perspective view illustrating an internal configuration of an electronic device according to an embodiment;
FIG. 4 is a second perspective view illustrating an internal configuration of an electronic device according to an embodiment;
FIG. 5 is an exploded perspective view illustrating an electronic device according to an embodiment;
FIG. 6 is another perspective view illustrating a wearable electronic device according to an embodiment;
FIG. 7 is a flowchart illustrating an operation of displaying a virtual obj ect based on the shape of an area in a wearable electronic device according to an embodiment;
FIG. 8 is a view illustrating an operation of displaying a virtual object of a different shape based on the shape of an area in a wearable electronic device according to an embodiment;
FIG. 9 is a view illustrating an operation of displaying a virtual object of a different shape based on the shape of an area in a wearable electronic device according to an embodiment;
FIG. 10 is a view illustrating an embodiment in which the shape of a virtual object is changed depending on the shape of an area where the virtual object is disposed, when the virtual object is moved, in a wearable electronic device according to an embodiment;
FIG. 11A is a view illustrating an embodiment in which the shape of a virtual object is changed depending on the shape of an area where the virtual object is disposed, when the virtual object is moved, in a wearable electronic device according to an embodiment;
FIG. 11B is a view illustrating an embodiment in which the shape of a virtual object is changed depending on the shape of an area where the virtual object is disposed, when the virtual object is moved, in a wearable electronic device according to an embodiment
FIG. 11C is a view illustrating an embodiment in which the shape of a virtual object is changed depending on the shape of an area where the virtual object is disposed, when the virtual object is moved, in a wearable electronic device according to an embodiment;
FIG. 12A is a view illustrating a layout of a plurality of virtual objects when there are the plurality of virtual objects according to an embodiment;
FIG. 12B is a view illustrating a layout of a plurality of virtual objects when there are the plurality of virtual objects according to an embodiment;
FIG. 13A is a view illustrating a virtual object of a first shape disposed in the air according to an embodiment
FIG. 13B is a view illustrating a virtual object of a second shape disposed on a bottom according to an embodiment;
FIG. 14A is a flowchart illustrating operations when the virtual object of the first shape shown in FIG. 13A is moved according to an embodiment;
FIG. 14B is a view illustrating an embodiment in which a virtual object of a first shape remains in shape even when moved according to an embodiment;
FIG. 14C is a view illustrating an embodiment in which a virtual object of a first shape is changed into a second shape when moved according to an embodiment;
FIG. 15A is a flowchart illustrating an operation of adding an icon to a displayed virtual object according to an embodiment;
FIG. 15B is a view illustrating an operation of adding an icon to a virtual object of a first shape according to an embodiment;
FIG. 15C is a view illustrating an operation of adding an icon to a virtual object of a second shape according to an embodiment;
FIG. 16A is a view illustrating an embodiment in which a virtual object is fixed to a user according to an embodiment; and
FIG. 16B is a view illustrating an embodiment in which a virtual object is fixed in a virtual space according to an embodiment.

### DETAILED DESCRIPTION

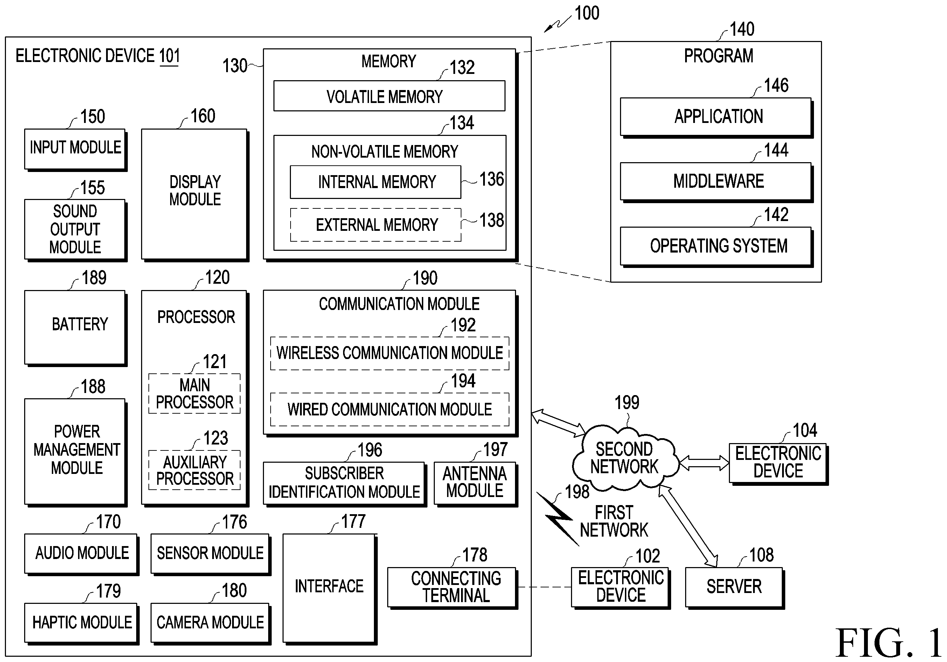

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network).According to an embodiment, the electronic device 101 may communicate with the electronic device 104 via the server 108.According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197.In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software(e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134.According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application).According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto.The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101.The input module 150 may include, for example, a microphone, a mouse, a keyboard, keys (e.g., buttons), or a digital pen (e.g., a stylus pen).

The sound output module 155 may output sound signals to the outside of the electronic device 101.The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101.The display 160 may include, for example, a display, a hologram device, or a projector and control circuitry to control a corresponding one of the display, hologram device, and projector.According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102)directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state.According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly.According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102).According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101.According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel.The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module).A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)).These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmittedor received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108.For example, if the electronic device 101 should perform a function or a service automatically, or in response to a request from a user or another device, the electronic device 101, instead of, or in addition to, executing the function or the service, may request the one or more external electronic devices to perform at least part of the function or the service.The one or more external electronic devices receiving the request may perform the at least part of the function or the service requested, or an additional function or an additional service related to the request, and transfer an outcome of the performing to the electronic device 101.The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

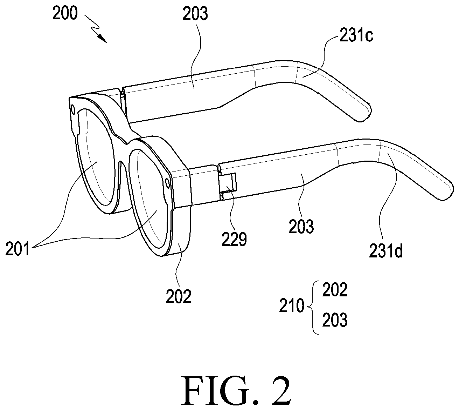

FIG. 2 is a perspective view illustrating an electronic device 200 (e.g., the electronic device 101 of FIG. 1) according to an embodiment.

Referring to FIG. 2, the electronic device 200 may be a glasses-type wearable electronic device, and the user may visually recognize her surrounding objects or environment while wearing the electronic device 200. For example, the electronic device 200 may be a head-mounted device (HMD) or smart glasses capable of providing images directly in front of the user's eyes. For example, the electronic device may be a virtual reality (VR) device. For example, the electronic device may be a video see-through (VST) device. The configuration of the electronic device 200 of FIG. 2 may be identical in whole or part to the configuration of the electronic device 101 of FIG. 1.

According to an embodiment, the electronic device 200 may include a housing that forms the exterior of the electronic device 200. The housing 210 may provide a space in which components of the electronic device 200 may be disposed. For example, the housing 210 may include a lens frame 202 and at least one wearing member 203.

According to an embodiment, the electronic device 200 may include at least one display member 201 configured to provide the user with visual information. For example, the display member 201 may include a module equipped with a lens, a display, a waveguide, and/or a touch circuit. According to an embodiment, the display member 201 may be transparent or translucent. According to an embodiment, the display member 201 may include a semitransparent glass or a window member the light transmittance of which may be adjusted as the coloring concentration is adjusted. According to an embodiment, a pair of display members 201 may be provided and disposed to correspond to the user's left and right eyes, respectively, with the electronic device 200 worn on the user's body.

According to an embodiment, the lens frame 202 may house at least a portion of the display member 201. For example, the lens frame 202 may surround at least a portion of the display member 201. According to an embodiment, the lens frame 202 may position at least one of the display members 201 to correspond to the user's eye. According to an embodiment, the lens frame 202 may be the rim of a normal eyeglass structure. According to an embodiment, the lens frame 202 may include at least one closed loop surrounding the display devices 201.

According to an embodiment, the wearing members 203 may extend from the lens frame 202. For example, the wearing members 203 may extend from ends of the lens frame 202 and, together with the lens frame 202, may be supported and/or positioned on a part (e.g., ears) of the user's body. According to an embodiment, the wearing members 203 may be rotatably coupled to the lens frame 202 through hinge structures 229. According to an embodiment, the wearing member 203 may include an inner side surface 231c configured to face the user's body and an outer side surface 231d opposite to the inner side surface.

According to an embodiment, the electronic device 200 may include the hinge structures 229 configured to fold the wearing members 203 on the lens frame 202. The hinge structure 229 may be disposed between the lens frame 202 and the wearing member 203. While the electronic device 200 is not worn, the user may fold the wearing members 203 on the lens frame 202 to carry or store the electronic device.

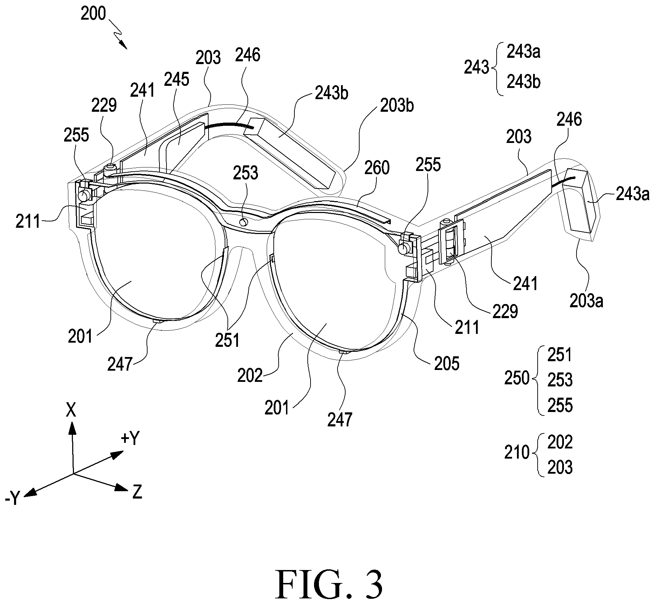

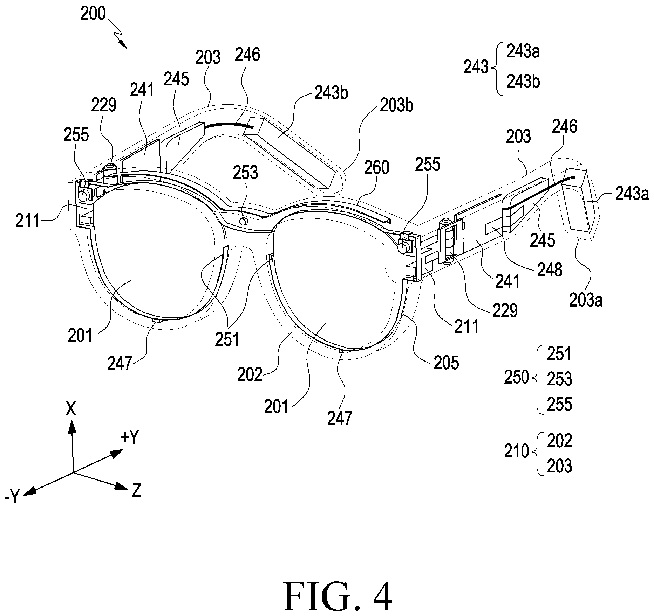

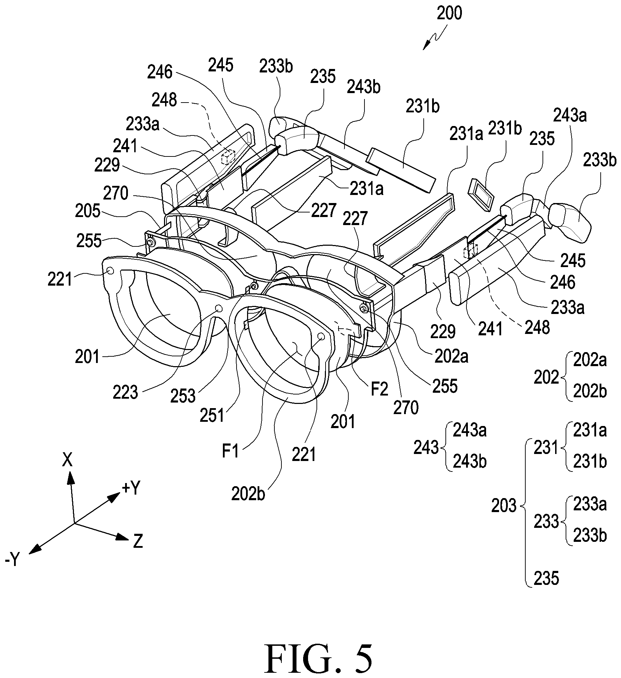

FIG. 3 is a first perspective view illustrating an internal configuration of an electronic device according to various embodiments. FIG. 4 is a second perspective view illustrating an internal configuration of an electronic device according to various embodiments. FIG. 5 is an exploded perspective view illustrating an electronic device according to various embodiments;

Referring to FIGS. 3 to 5, an electronic device 200 may include components housed in the housing 210 (e.g., at least one circuit board 241 (e.g., printed circuit board (PCB), printed board assembly (PBA), flexible PCB, or rigid-flexible PCB (RFPCB)), at least one battery 243, at least one speaker module 245, at least one power transfer structure 246, and a camera module 250). The configuration of the housing 210 of FIGS. 3 and 4 may be identical in whole or part to the configuration of the display members 201, the lens frame 202, the wearing members 203, and the hinge structures 229 of FIG. 2.

According to an embodiment, the electronic device 200 may obtain and/or recognize a visual image regarding an object or environment in the direction (e.g., negative y direction) in which the electronic device 200 faces or the direction in which the user gazes, using the camera module 250 (e.g., the camera module 180 of FIG. 1) and may receive information regarding the object or environment from an external electronic device (e.g., the electronic device 102 or 104 or the server 108 of FIG. 1) through a network (e.g., the first network 198 or second network 199 of FIG. 1). In another embodiment, the electronic device 200 may provide the received object or environment-related information, in the form of an audio or visual form, to the user. The electronic device 200 may provide the received object or environment-related information, in a visual form, to the user through the display members 201, using the display module (e.g., the display module 160 of FIG. 1). For example, the electronic device 200 may implement augmented reality (AR) by implementing the object or environment-related information in a visual form and combining it with an actual image of the user's surrounding environment.

According to an embodiment, the display member 201 may include a first surface F1 facing in a direction (e.g., negative Y direction) in which external light is incident and a second surface F2 facing in a direction (e.g., positive Y direction) opposite to the first surface F1. With the user wearing the electronic device 200, at least a portion of the light or image coming through the first surface F1 may be incident on the user's left eye and/or right eye through the second surface F2 of the display member 201 disposed to face the user's left eye and/or right eye.

According to an embodiment, the lens frame 202 may include at least two or more frames. For example, the lens frame 202 may include a first frame 202a and a second frame 202b. According to an embodiment, when the user wears the electronic device 200, the first frame 202a may be a frame of the portion facing the user's face, and the second frame 202b may be a portion of the lens frame 202 spaced from the first frame 202a in the gazing direction (e.g., negative Y direction) in which the user gazes.

According to an embodiment, the light output module 211 may provide an image and/or video to the user. For example, the light output module 211 may include a display panel capable of outputting images and a lens corresponding to the user's eye and guiding images to the display member 201. For example, the user may obtain the image output from the display panel of the light output module 211 through the lens of the light output module 211. According to an embodiment, the light output module 211 may include a device configured to display various information. For example, the light output module 211 may include at least one of a liquid crystal display (LCD), a digital mirror device (DMD), a liquid crystal on silicon (LCoS), or an organic light emitting diode (OLED), or a micro light emitting diode (micro LED). According to an embodiment, when the light output module 211 and/or the display member 201 includes one of a liquid crystal display device, a digital mirror display device, or a silicon liquid crystal display device, the electronic device 200 may include a light output module 211 and/or a light source emitting light to the display area of the display member 201. According to another embodiment, when the light output module 211 and/or the display member 201 includes organic light emitting diodes or micro LEDs, the electronic device 200 may provide virtual images to the user without a separate light source.

According to an embodiment, at least a portion of the light output module 211 may be disposed in the housing 210. For example, the light output module 211 may be disposed in the wearing member 203 or the lens frame 202 to correspond to each of the user's right eye and left eye. According to an embodiment, the light output module 211 may be connected to the display member 201 and may provide images to the user through the display member 201. For example, the image output from the light output module 211 may be incident on the display member 201 through an input optical member positioned at an end of the display member 201 and be radiated to the user's eyes through a waveguide and an output optical member positioned in at least a portion of the display member 201. According to an embodiment, the waveguide may be formed of glass, plastic, or polymer. The waveguide may include a nano pattern formed on one surface of the inside or outside, e.g., a grating structure having a polygonal or curved shape. According to an embodiment, the waveguide may include at least one diffractive element, e.g., at least one of a diffractive optical element (DOE), a holographic optical element (HOE), or a reflective element (e.g., a reflective mirror).

According to an embodiment, the circuit board 241 may include components for driving the electronic device 200. For example, the circuit board 241 may include at least one integrated circuit chip. Further, at least one of the processor 120, the memory 130, the power management module 188, or the communication module 190 of FIG. 1 may be provided in the integrated circuit chip. According to an embodiment, a circuit board 241 may be disposed in the wearing member 203 of the housing 210. According to an embodiment, the circuit board 241 may be electrically connected to the battery 243 through the power transfer structure 246. According to an embodiment, the circuit board 241 may be connected to the flexible printed circuit board 205 and may transfer electrical signals to the electronic components (e.g., the light output module 211, the camera module 250, and the light emitting unit) of the electronic device through the flexible printed circuit board 205. According to an embodiment, the circuit board 241 may be an interposer circuit board.

According to various embodiments, the flexible printed circuit board 205 may extend from the circuit board 241 through the hinge structure 229 to the inside of the lens frame 202 and may be disposed in at least a portion of the inside of the lens frame 202 around the display member 201.

According to an embodiment, the battery 243 (e.g., the battery 189 of FIG. 1) may be connected with components (e.g., the light output module 211, the circuit board 241, and the speaker module 245, the microphone module 247, and/or the camera module 250) of the electronic device 200 and may supply power to the components of the electronic device 200.

According to an embodiment, at least a portion of the battery 243 may be disposed in the wearing member 203. According to an embodiment, batteries 243 may be disposed adjacent to ends 203a and 203b of the wearing members 203. For example, the batteries 243 may include a first battery 243a disposed in a first end 203a of the wearing member 203 and a second battery 243b disposed in a second end 203b of the wearing member 203.

According to various embodiments, the speaker module 245 (e.g., the audio module 170 or the sound output module 155 of FIG. 1) may convert an electrical signal into sound. At least a portion of the speaker module 245 may be disposed in the wearing member 203 of the housing 210. According to an embodiment, the speaker module 245 may be located in the wearing member 203 to correspond to the user's ear. According to an embodiment (e.g., FIG. 3), the speaker module 245 may be disposed on the circuit board 241. For example, the speaker module 245 may be disposed between the circuit board 241 and the inner case (e.g., the inner case 231 of FIG. 5). According to an embodiment (e.g., FIG. 4), the speaker module 245 may be disposed next to the circuit board 241. For example, the speaker module 245 may be disposed between the circuit board 241 and the battery 243.

According to an embodiment, the electronic device 200 may include a connection member 248 connected with the speaker module 245 and the circuit board 241. The connection member 248 may transfer at least part of the sound and/or vibration generated by the speaker module 245 to the circuit board 241. According to an embodiment, the connection member 248 may be integrally formed with the speaker module 245. For example, a portion extending from the speaker frame of the speaker module 245 may be interpreted as the connection member 248. According to an embodiment (e.g., FIG. 3), the connection member 248 may be omitted. For example, when the speaker module 245 is disposed on the circuit board 241, the connection member 248 may be omitted.

According to an embodiment, the power transfer structure 246 may transfer the power from the battery 243 to an electronic component (e.g., the light output module 211) of the electronic device 200. For example, the power transfer structure 246 may be electrically connected to the battery 243 and/or the circuit board 241, and the circuit board 241 may transfer the power received through the power transfer structure 246 to the light output module 211.

According to an embodiment, the power transfer structure 246 may be a component capable of transferring power. For example, the power transfer structure 246 may include a flexible printed circuit board or wiring. For example, the wiring may include a plurality of cables. In various embodiments, various changes may be made to the shape of the power transfer structure 246 considering the number and/or type of the cables.

According to an embodiment, the microphone module 247 (e.g., the input module 150 and/or the audio module 170 of FIG. 1) may convert a sound into an electrical signal. According to an embodiment, the microphone module 247 may be disposed in at least a portion of the lens frame 202. For example, at least one microphone module 247 may be disposed on a lower end (e.g., in the negative X-axis direction) and/or on an upper end (e.g., in the positive X-axis direction) of the electronic device 200. According to an embodiment, the electronic device 200 may more clearly recognize the user's voice using voice information (e.g., sound) obtained by the at least one microphone module 247. For example, the electronic device 200 may distinguish the voice information from the ambient noise based on the obtained voice information and/or additional information (e.g., low-frequency vibration of the user's skin and bones). For example, the electronic device 200 may clearly recognize the user's voice and may perform a function of reducing ambient noise (e.g., noise canceling).

According to an embodiment, the camera module 250 may capture a still image and/or a video. The camera module 250 may include at least one of a lens, at least one image sensor, an image signal processor, or a flash. According to an embodiment, the camera module 250 may be disposed in the lens frame 202 and may be disposed around the display member 201.

According to an embodiment, the camera module 250 may include at least one first camera module 251. According to an embodiment, the first camera module 251 may capture the trajectory of the user's eye (e.g., a pupil) or gaze. For example, the first camera module 251 may capture the reflection pattern of the light emitted by the light emitting unit to the user's eyes. For example, the light emitting unit may emit light in an infrared band for tracking the trajectory of the gaze using the first camera module 251. For example, the light emitting unit may include an infrared (IR) light emitting diodes (LED). According to an embodiment, the processor (e.g., the processor 120 of FIG. 1) may adjust the position of the virtual image so that the virtual image projected on the display member 201 corresponds to the direction in which the user's pupil gazes. According to an embodiment, the first camera module 251 may include a global shutter (GS)-type camera. It is possible to track the trajectory of the user's eyes or gaze using a plurality of third camera modules 251 having the same specifications and performance.

According to various embodiments, the first camera module 251 may periodically or aperiodically transmit information related to the trajectory of the user's eye or gaze (e.g., trajectory information) to the processor (e.g., the processor 120 of FIG. 1). According to another embodiment, when the first camera module 251 detects a change in the user's gaze based on the trajectory information (e.g., when the user's eyes move more than a reference value with the head positioned still), the first camera module 251 may transmit the trajectory information to the processor.

According to an embodiment, the camera modules 250 may include at least one second camera module 253. According to an embodiment, the second camera module 253 may capture an external image. According to an embodiment, the second camera module 253 may be a global shutter-type or rolling shutter (RS)-type camera. According to an embodiment, the second camera module 253 may capture an external image through the second optical hole 223 formed in the second frame 202b. For example, the second camera module 253 may include a high-resolution color camera, and it may be a high resolution (HR) or photo video (PV) camera. Further, the second camera module 253 may provide an auto-focus (AF) function and an optical image stabilizer (OIS) function.

According to various embodiments, the electronic device 200 may include a flash positioned adjacent to the second camera module 253. For example, the flash may provide light for increasing brightness (e.g., illuminance) around the electronic device 200 when an external image is obtained by the second camera module 253, thereby reducing difficulty in obtaining an image due to the dark environment, the mixing of various light beams, and/or the reflection of light.

According to an embodiment, the camera modules 250 may include at least one third camera module 255. According to an embodiment, the third camera module 255 may capture the user's motion through a first optical hole 221 formed in the lens frame 202. For example, the third camera module 255 may capture the user's gesture (e.g., hand gesture). Third camera modules 255 and/or first optical holes 221 may be disposed on two opposite sides of the lens frame 202 (e.g., the second frame 202b), e.g., formed in two opposite ends of the lens frame 202 (e.g., the second frame 202b) with respect to the X direction. According to an embodiment, the third camera module 255 may be a global shutter (GS)-type camera. For example, the third camera module 255 may be a camera supporting 3DoF (degrees of freedom) or 6DoF, which may provide position recognition and/or motion recognition in a 360-degree space (e.g., omni-directionally). According to an embodiment, the third camera modules 255 may be stereo cameras and may perform the functions of simultaneous localization and mapping (SLAM) and user motion recognition using a plurality of global shutter-type cameras with the same specifications and performance. According to an embodiment, the third camera module 255 may include an infrared (IR) camera (e.g., a time of flight (TOF) camera or a structured light camera). For example, the IR camera may be operated as at least a portion of a sensor module (e.g., the sensor module 176 of FIG. 1) for detecting a distance from the subject.

According to an embodiment, at least one of the first camera module 251 or the third camera module 255 may be replaced with a sensor module (e.g., the sensor module 176 of FIG. 1). For example, the sensor module may include at least one of a vertical cavity surface emitting laser (VCSEL), an infrared sensor, and/or a photodiode. For example, the photodiode may include a positive intrinsic negative (PIN) photodiode or an avalanche photodiode (APD). The photodiode may be referred to as a photo detector or a photo sensor.

According to an embodiment, at least one of the first camera module 251, the second camera module 253, and the third camera module 255 may include a plurality of camera modules. For example, the second camera module 253 may include a plurality of lenses (e.g., wide-angle and telephoto lenses) and image sensors and may be disposed on one surface (e.g., a surface facing in the negative Y axis) of the electronic device 200. For example, the electronic device 200 may include a plurality of camera modules having different properties (e.g., angle of view) or functions and control to change the angle of view of the camera module based on the user's selection and/or trajectory information. At least one of the plurality of camera modules may be a wide-angle camera and at least another of the plurality of camera modules may form a telephoto camera.

According to various embodiments, the processor (e.g., processor 120 of FIG. 1) may determine the motion of the electronic device 200 and/or the user's motion using information for the electronic device 200 obtained using at least one of a gesture sensor, a gyro sensor, or an acceleration sensor of the sensor module (e.g., the sensor module 176 of FIG. 1) and the user's action (e.g., approach of the user's body to the electronic device 200) obtained using the third camera module 255. According to an embodiment, in addition to the above-described sensor, the electronic device 200 may include a magnetic (geomagnetic) sensor capable of measuring an orientation using a magnetic field and magnetic force lines and/or a hall sensor capable of obtaining motion information (e.g., moving direction or distance) using the strength of a magnetic field. For example, the processor may determine the motion of the electronic device 200 and/or the user's motion based on information obtained from the magnetic (geomagnetic) sensor and/or the hall sensor.

According to various embodiments , the electronic device 200 may perform an input function (e.g., a touch and/or pressure sensing function) capable of interacting with the user. For example, a component configured to perform a touch and/or pressure sensing function (e.g., a touch sensor and/or a pressure sensor) may be disposed in at least a portion of the wearing member 203. The electronic device 200 may control the virtual image output through the display member 201 based on the information obtained through the components. For example, a sensor associated with a touch and/or pressure sensing function may be configured in various types, e.g., a resistive type, a capacitive type, an electro-magnetic (EM) type, or an optical type. According to an embodiment, the component configured to perform the touch and/or pressure sensing function may be identical in whole or part to the configuration of the input module 150 of FIG. 1.

According to an embodiment, the electronic device 200 may including a reinforcing member 260 that is disposed in an inner space of the lens frame 202 and formed to have a higher rigidity than that of the lens frame 202.

According to an embodiment, the electronic device 200 may include a lens structure 270. The lens structure 270 may refract at least a portion of light. For example, the lens structure 270 may be a prescription lens having a designated refractive power. According to an embodiment, the housing 210 may include a hinge cover 227 that may conceal a portion of the hinge structure 229. Another part of the hinge structure 229 may be housed or hidden between an inner case 231 and an outer case 233, which are described below.

According to various embodiments, the wearing member 203 may include the inner case 231 and the outer case 233. The inner case 231 may be, e.g., a case configured to face the user's body or directly contact the user's body, and may be formed of a material having low thermal conductivity, e.g., a synthetic resin. According to an embodiment, the inner case 231 may include an inner side surface (e.g., the inner side surface 231c of FIG. 2) facing the user's body. The outer case 233 may include, e.g., a material (e.g., a metal) capable of at least partially transferring heat and may be coupled to the inner case 231 to face each other. According to an embodiment, the outer case 233 may include an outer side surface (e.g., the outer side surface 231d of FIG. 2) opposite to the inner side surface 331c. In an embodiment, at least one of the circuit board 241 or the speaker module 245 may be disposed in a space separated from the battery 243 in the wearing member 203. In the illustrated embodiment, the inner case 231 may include a first case 231a including the circuit board 241 and/or the speaker module 245 and a second case 231b to house the battery 243, and the outer case 233 may include a third case 233a coupled to face the first case 231a and a fourth case 233b coupled to face the second case 231b. For example, the first case 231a and the third case 233a may be coupled (hereinafter, 'first case portions 231a and 233a') to house the circuit board 241 and/or the speaker module 245, and the second case 231b and the fourth case 233b may be coupled (hereinafter, 'second case portions 231b and 233b') to house the battery 243.

According to an embodiment, the first case portions 231a and 233a may be rotatably coupled to the lens frame 202 through the hinge structure 229, and the second case portions 231b and 233b may be connected or mounted to the ends of the first case portions 231a and 233a through the connecting structure 235. In some embodiments, a portion of the connecting structure 235 in contact with the user's body may be formed of a material having low thermal conductivity, e.g., an elastic material, such as silicone, polyurethane, or rubber, and another portion thereof which does not come into contact with the user's body may be formed of a material having high thermal conductivity (e.g., a metal). For example, when heat is generated from the circuit board 241 or the battery 243, the connecting structure 235 may block heat transfer to the portion in contact with the user's body while dissipating or discharging heat through the portion not in contact with the user's body. According to an embodiment, a portion of the connecting structure 235 configured to come into contact with the user's body may be interpreted as a portion of the inner case 231, and a portion of the connecting structure 235 that does not come into contact with the user's body may be interpreted as a portion of the outer case 233. According to an embodiment, the first case 231a and the second case 231b may be integrally configured without the connecting structure 235, and the third case 233a and the fourth case 233b may be integrally configured without the connecting structure 235. According to various embodiments, other components (e.g., the antenna module 197 of FIG. 1) may be further included in addition to the illustrated components, and information regarding an object or environment may be received from an external electronic device (e.g., the electronic device 102 or 104 or server 108 of FIG. 1) through a network (e.g., the first network 198 or second network 199 of FIG. 1) using the communication module 190.

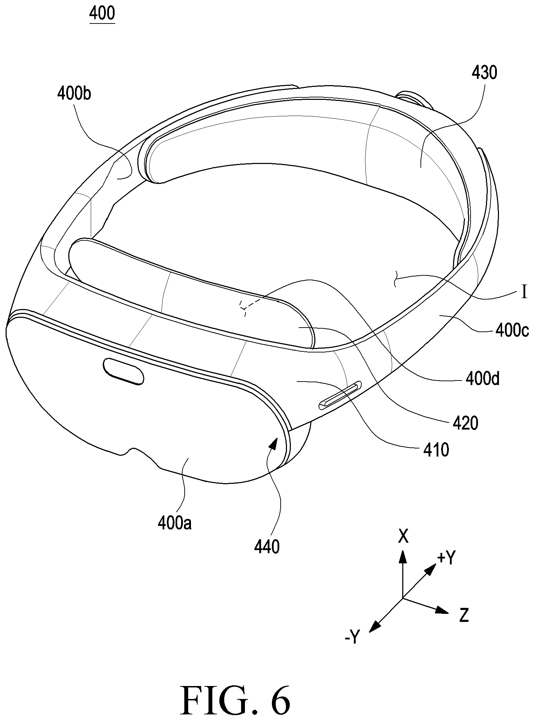

FIG. 6 is another perspective view illustrating an electronic device according to various embodiments of the disclosure.

Referring to FIG. 6, an electronic device 400 may be a head mounting device (HMD) capable of providing an image in front of the user's eyes. The configuration of the electronic device 400 of FIG. 6 may be identical in whole or part to the configuration of the electronic device 200 of FIG. 2.

According to various embodiments, the electronic device 400 may form the exterior of the electronic device 400 and may include housings 410, 420, and 430 that may provide a space in which components of the electronic device 400 may be disposed.

According to various embodiments, the electronic device 400 may include a first housing 410 that may surround at least a portion of the user's head. According to an embodiment, the first housing 410 may include a first surface 400a facing the outside (e.g., negative Y direction) of the electronic device 400.

According to various embodiments, the first housing 410 may surround at least a portion of the inner space I. For example, the first housing 410 may include a second surface 400b facing the inner space I of the electronic device 400 and a third surface 400c opposite to the second surface 400b. According to an embodiment, the first housing 410 may be coupled with the third housing 430 and may be formed in a closed loop shape surrounding the inner space I.

According to various embodiments, the first housing 410 may surround at least some of the components of the electronic device 400. For example, the light output module (e.g., the light output module 211 of FIG. 3), the circuit board (e.g., the circuit board 241 of FIG. 3), and the speaker module 245 may be disposed in the first housing 410.

According to various embodiments, the electronic device 400 may include one display member 440 corresponding to the left eye and the right eye. The display member 440 may be disposed in the first housing 410. The configuration of the display member 440 of FIG. 6 may be identical in whole or part to the configuration of the display member 201 of FIG. 2.

According to various embodiments, the electronic device 400 may include a second housing 420 that may be seated on the user's face. According to an embodiment, the second housing 420 may include a fourth surface 400d that may at least partially face the user's face. According to an embodiment, the fourth surface 400d may be a surface in a direction (e.g., positive Y direction) toward the internal space I of the electronic device 400. According to an embodiment, the second housing 420 may be coupled with the first housing 410.

According to various embodiments, the electronic device 400 may include a third housing 430 that may be seated on the back of the user's head. According to an embodiment, the third housing 430 may be coupled with the first housing 410. According to an embodiment, the third housing 430 may surround at least some of the components of the electronic device 400. For example, a battery (e.g., the battery 243 of FIG. 3) may be disposed in the third housing 430.

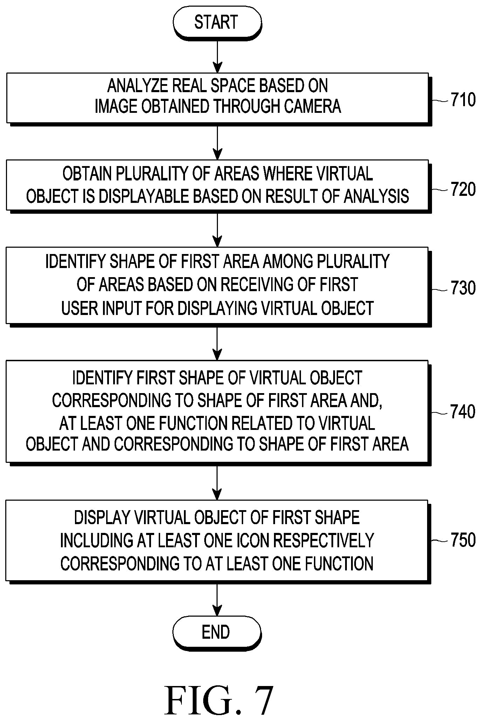

FIG. 7 is a flowchart illustrating an operation of displaying a virtual object based on the shape of an area in a wearable electronic device according to an embodiment of the disclosure.

Referring to FIG. 7, a wearable electronic device (e.g., the electronic device 101 of FIG. 1, the processor 120 of FIG. 1, the electronic device 200 of FIG. 2, or the electronic device 400 of FIG. 6) may analyze a real space based on an image obtained through a camera (e.g., the camera module 180 of FIG. 1) in operation 710.

According to an embodiment, the wearable electronic device may analyze the structure and size of the real space and the arrangement, size, and/or distances from the wearable electronic device, of real objects (e.g., walls, furniture, home appliances, bottom, humans or things) included in the real space based on the image obtained through the camera.

According to an embodiment, the wearable electronic device may analyze structure and size of the real space and the arrangement, size, and/or distances from the wearable electronic device, of real objects included in the real space, further using at least one sensor (e.g., the sensor module 176 of FIG. 1).

According to an embodiment, in operation 720, the wearable electronic device may obtain a plurality of areas where virtual objects may be displayed, based on the analysis result.

According to an embodiment, the virtual object may be a widget corresponding to an application executable on the wearable electronic device.

According to an embodiment, the plurality of areas where a virtual object may be displayed may include at least one of bottoms (e.g., table tops), walls, or in air.

According to an embodiment, the wearable electronic device may obtain areas equal to or larger than a specific area where a virtual object may be disposed as the plurality of areas where a virtual object may be displayed.

According to an embodiment, in operation 730, the wearable electronic device may identify the shape of a first area among the plurality of areas based on receiving a first user input for displaying a virtual object.

According to an embodiment, the first area may have a bottom shape, a wall shape, or an in-air shape.

According to an embodiment, the wearable electronic device may identify the first area where a virtual object is to be displayed among the plurality of areas based on receiving the first user input.

According to an embodiment, upon receiving a user input for selecting a virtual object to dispose a virtual object in the virtual space, the wearable electronic device may identify the first area meeting a set condition among the plurality of areas. According to an embodiment, the set condition may be the largest area among the plurality of areas, the area where the corresponding virtual object is disposed statistically most frequently, the area where there is a history for the user to have disposed the corresponding virtual object most frequently, or the area with the highest relation with the application corresponding to the corresponding virtual object.

According to an embodiment, the wearable electronic device may select a virtual object to dispose a virtual object in the virtual space and, upon receiving a user input to approach one of the plurality of areas, identify that the area approached by the virtual object is the first area.

According to an embodiment, the user input may be a gesture input, a voice input, and/or a gaze tracking input.

According to an embodiment, in operation 740, the wearable electronic device may identify a first shape of the virtual object corresponding to the shape of the first area and at least one function corresponding to the shape of the first area related to the virtual object.

For example, when the shape of the first area where the virtual object is disposed is an in-air, the wearable electronic device may identify the shape of the virtual object corresponding to the in-air. According to an embodiment, when the shape of the first area is a bottom, the wearable electronic device may identify the shape of the virtual object corresponding to the bottom. According to an embodiment, when the shape of the first area is a wall, the wearable electronic device may identify the shape of the virtual object corresponding to the wall.

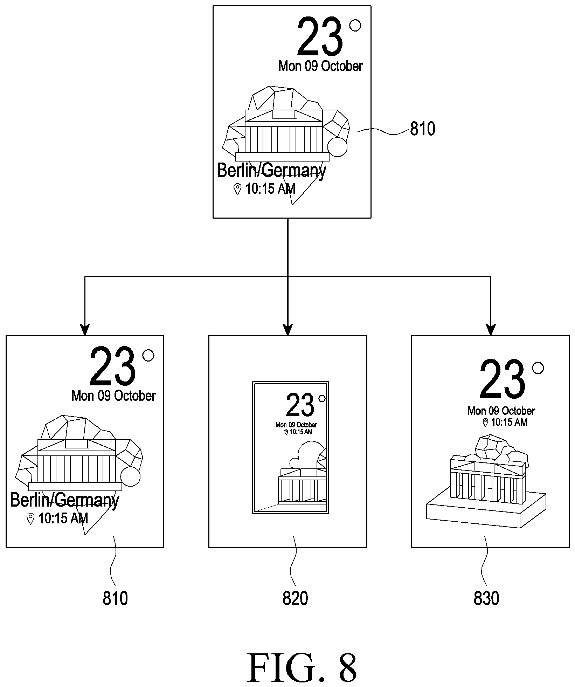

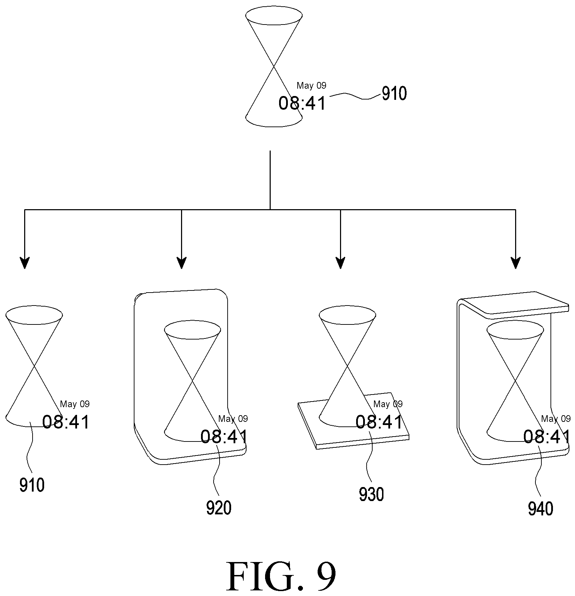

According to an embodiment, the shape of the virtual object according to the shape of the area where the virtual object is disposed is described below with reference to FIGS. 8 and 9.

According to an embodiment, the wearable electronic device may identify the function included in the virtual object based on the shape of the first area where the virtual object is disposed. According to an embodiment, the wearable electronic device may also identify the function included in the virtual object based on the shape of the virtual object.

According to an embodiment, the type and/or number of functions included in the virtual object may differ depending on the shape of the virtual object and/or the shape of the area where the virtual object is disposed although the application related to the virtual object is the same.

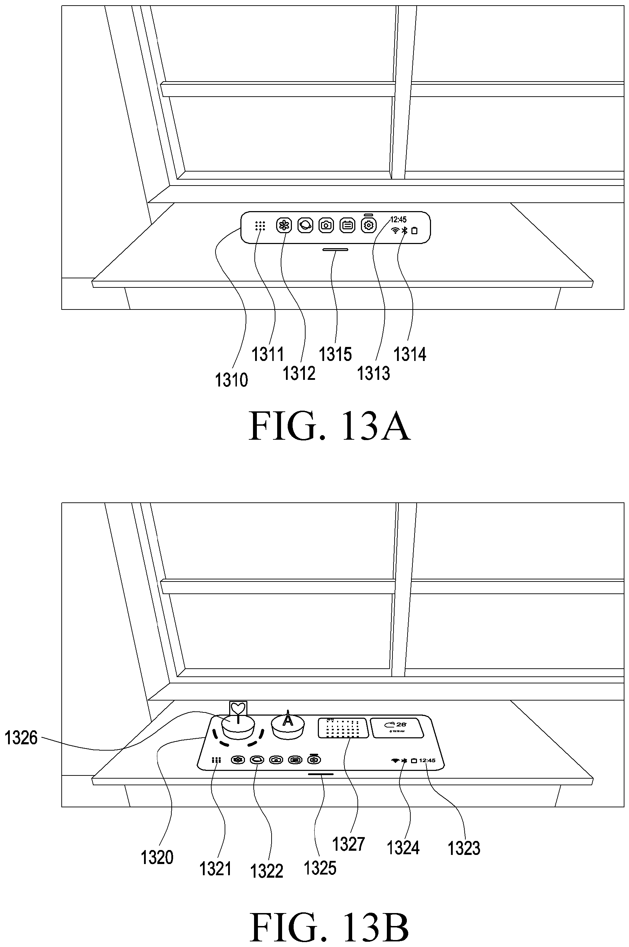

According to an embodiment, an embodiment in which the type and/or number of functions included differs depending on the shape of the virtual object and/or the shape of the area where the virtual object is disposed is described below with reference to FIGS. 13A and 13B.

According to an embodiment, in operation 750, the wearable electronic device may display a virtual object of a first shape including at least one icon respectively corresponding to at least one function.

According to an embodiment, the wearable electronic device may display, in the first area, the virtual object of the first shape including at least one icon respectively corresponding to at least one function identified depending on the shape of the virtual object and/or the shape of the area where the virtual object is disposed.

According to an embodiment, the at least one icon may be a widget for displaying information, executing the function, and/or executing the application. For example, when the virtual object disposed in the first area is a widget related to a multi-interaction function (e.g., task bar or home screen interface), a widget related to another function and/or application may be included in the virtual object.

According to an embodiment, the shape of the icon corresponding to the same function may also differ depending on the shape of the virtual object. For example, the icon corresponding to a first function included in the virtual object of the first shape may be a 2D icon, and the icon corresponding to the first function included in the virtual object of the second shape may be a 3D icon.

According to an embodiment, an embodiment in which a plurality of icons are included in a virtual object is described below with reference to FIGS. 13A and 13B.

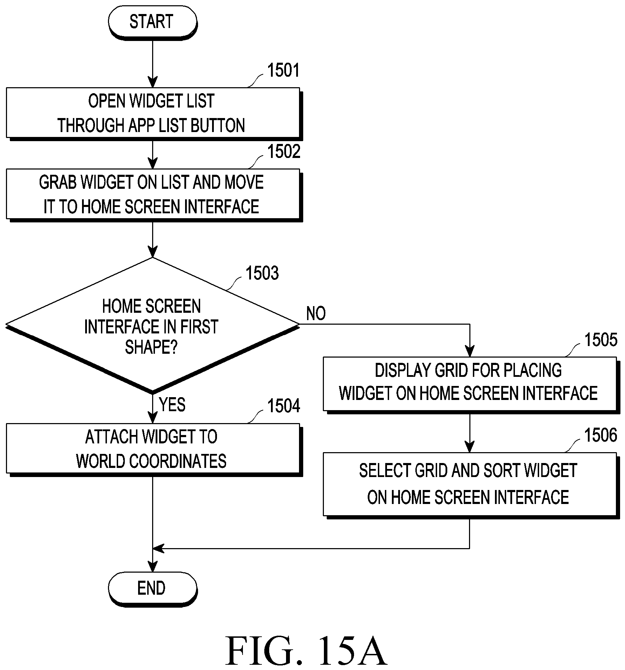

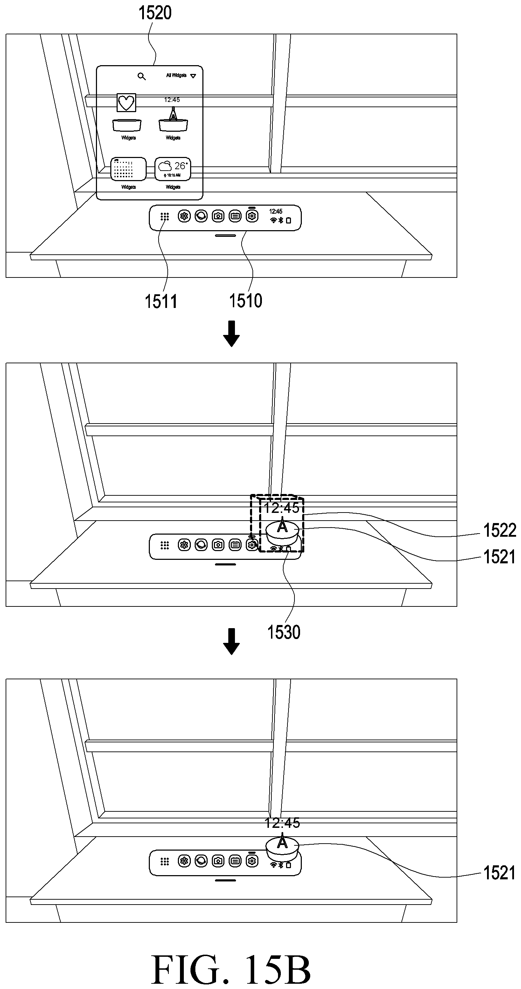

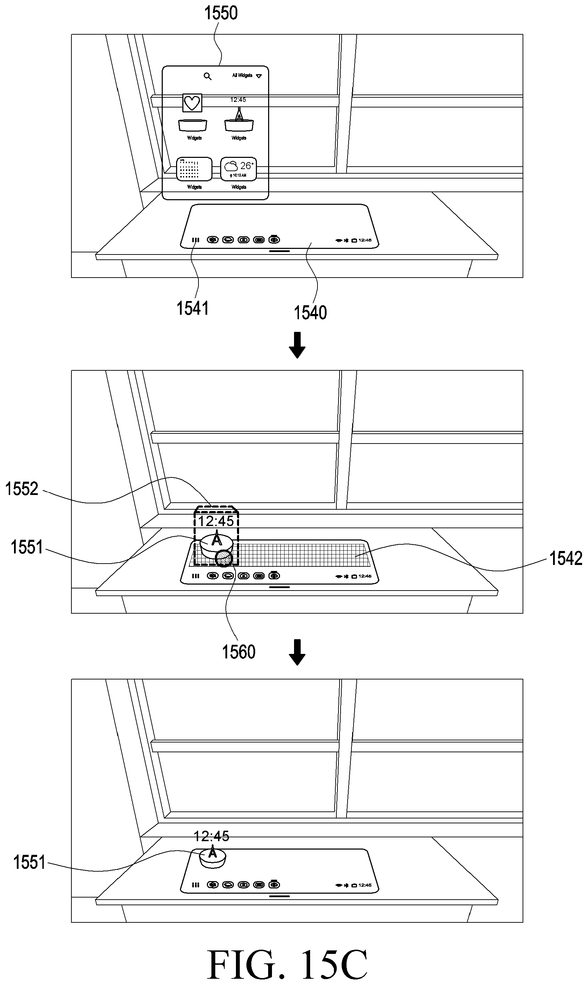

According to an embodiment, the wearable electronic device may add an icon related to a second function based on receiving a third user input for adding the icon related to the second function to the virtual object. For example, upon receiving a user input to add the icon related to the second function to the virtual object of the first shape, the wearable electronic device may add a 2D icon to the virtual object of the first shape. According to an embodiment, upon receiving a user input for adding an icon related to the second function to the virtual object of the second shape, the wearable electronic device may add a 3D icon related to the second function to the virtual object of the second shape. According to an embodiment, an embodiment of adding an icon to a virtual object is described with reference to FIGS. 15A, 15B, and 15C.

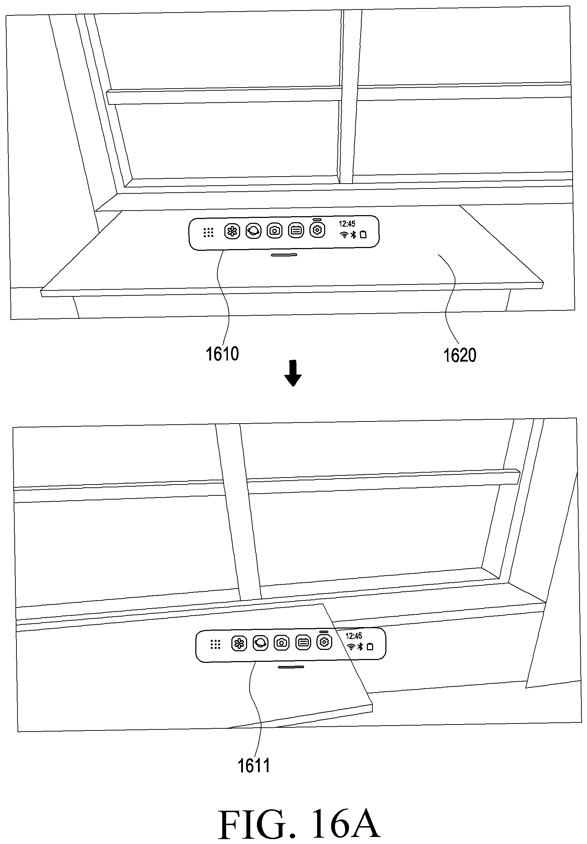

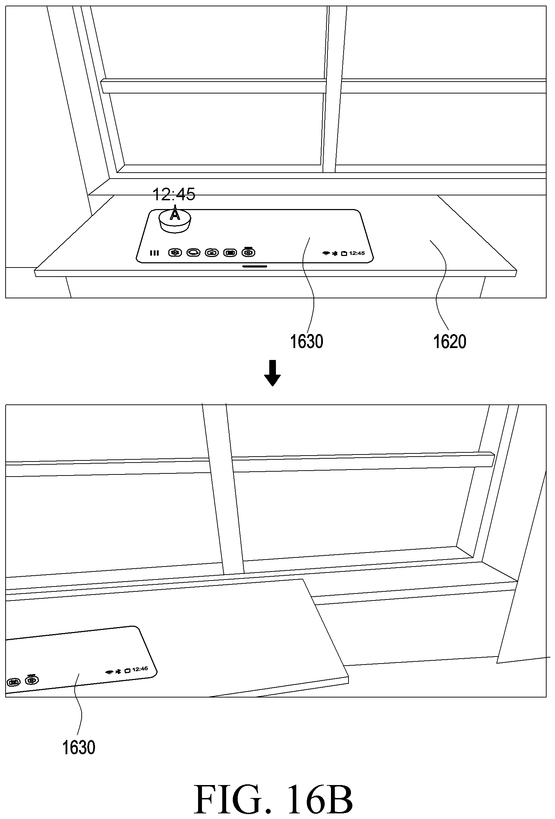

According to an embodiment, the virtual object may be fixed in the virtual space or to the user. For example, when the virtual object is fixed in the virtual space, if the field of view is varied as the user moves, the virtual object may be viewed only partially or may not be viewed. According to an embodiment, when the virtual object is fixed to the user, although the field of view is varied as the user moves, the virtual object may be moved along with the user's movement so that the display may be maintained. According to an embodiment, an embodiment in which a virtual object is fixed in a virtual space or to the user is described below with reference to FIGS. 16A and 16B.

According to an embodiment, the wearable electronic device may replace by the virtual object of the second shape corresponding to the shape of the second area and different from the first shape, based on receiving a second user input to move the virtual object of the first shape displayed in the first area to second area different from the first area.

According to an embodiment, the second area may have a shape different from the first area, among a bottom shape, a wall shape, or an in-air shape.

According to an embodiment, at least one of the type of corresponding function or number of at least one icons included in the virtual object of the second shape may differ from the virtual object of the first shape. According to an embodiment, the type of function and number of at least one icon included in the virtual object of the first shape may be the same as the type of function and number of at least one icon included in the virtual object of the first shape.

According to an embodiment, the wearable electronic device may replace the virtual object of the first shape with the virtual object of the second shape based on approach of the virtual object of the first shape from the first area to around the second area through the second user input and, if the second user input is complete, fix the virtual object of the second shape in the second area.

For example, when the virtual object of the first shape on the table is moved to the wall, the wearable electronic device may change the virtual object into the second shape before released, if the virtual object of the first shape approaches around the wall.

Thus, the user may identify the changed shape of the virtual object before fixing the virtual object in another area.

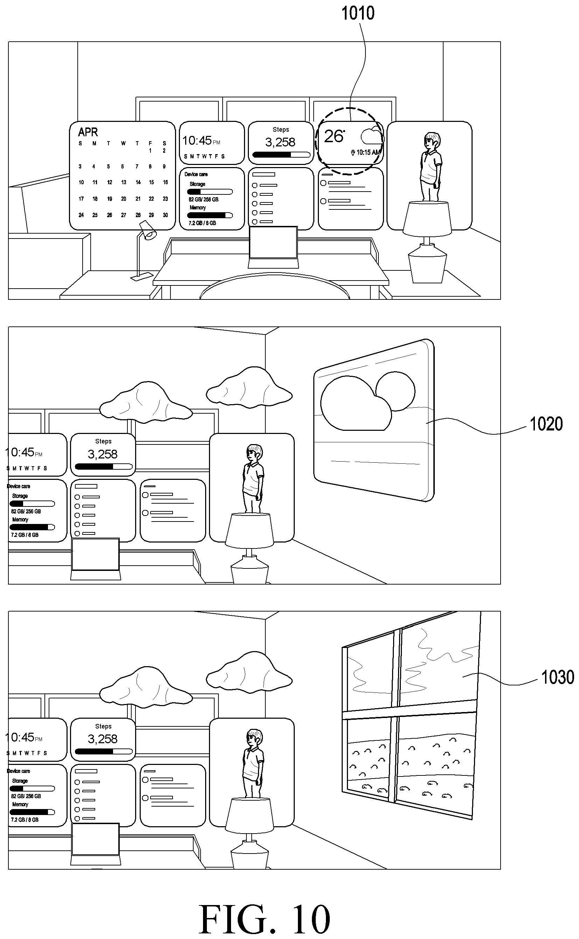

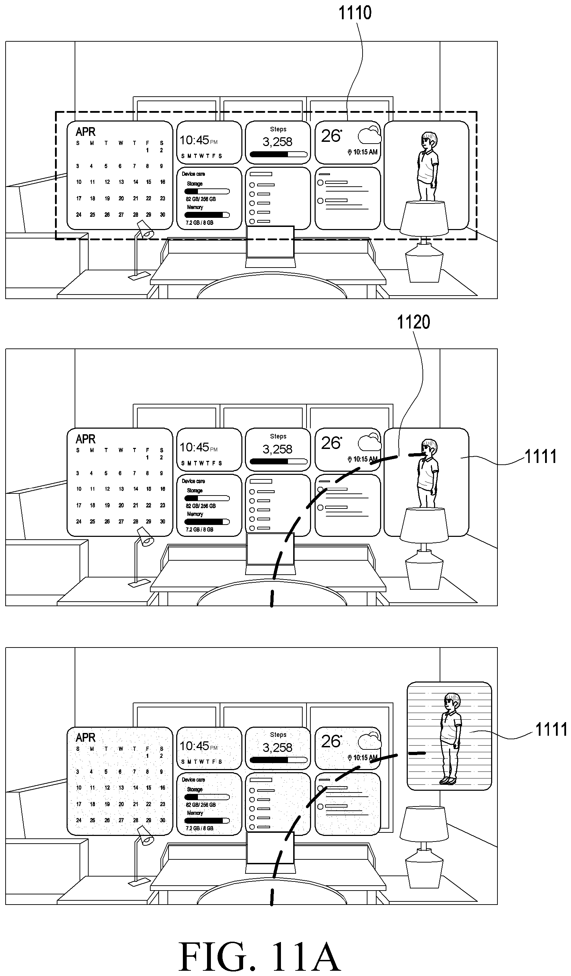

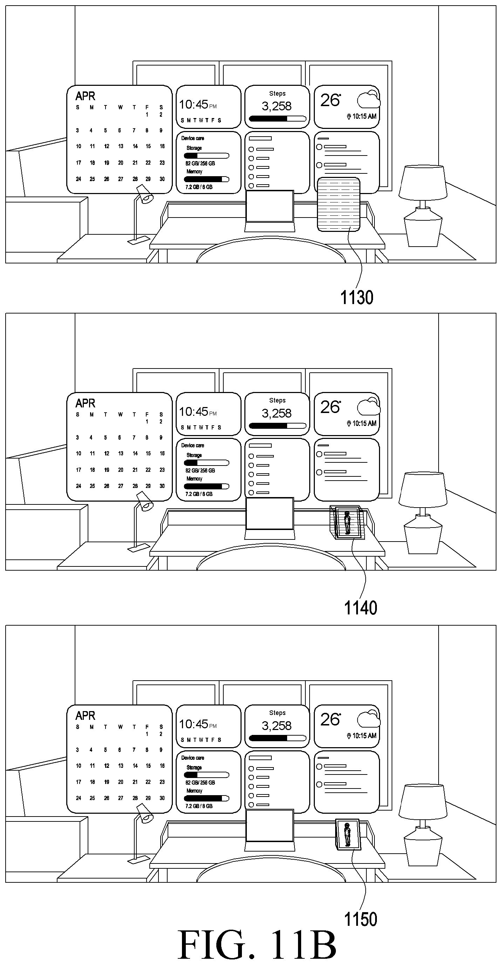

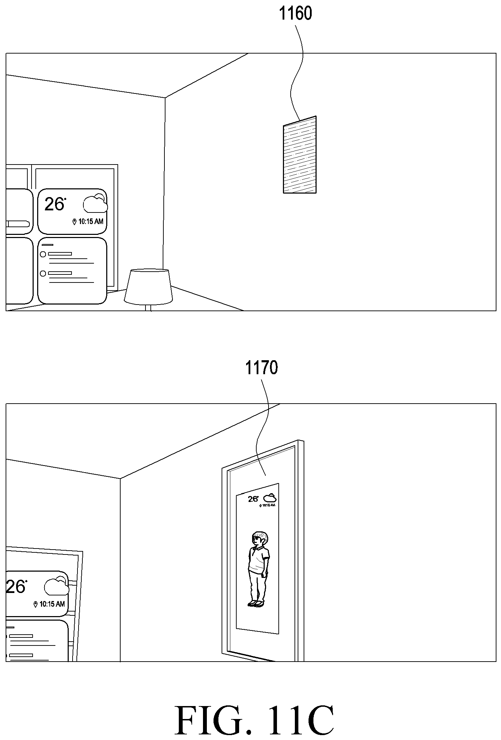

According to an embodiment, the operation of moving the virtual object of the first shape to replace with the virtual object of the second shape is described below with reference to FIGS. 10, 11A, 11B, and 11C.

According to an embodiment, the wearable electronic device may display a virtual object indicating that the virtual object of the second shape may be fixed based on approach of the virtual object of the first shape from the first area to around the second area through the second user input. For example, the wearable electronic device may display a virtual object of a grid shape based on approach of the virtual object to around the second area, indicating that the virtual object of the first shape or second shape may be disposed.

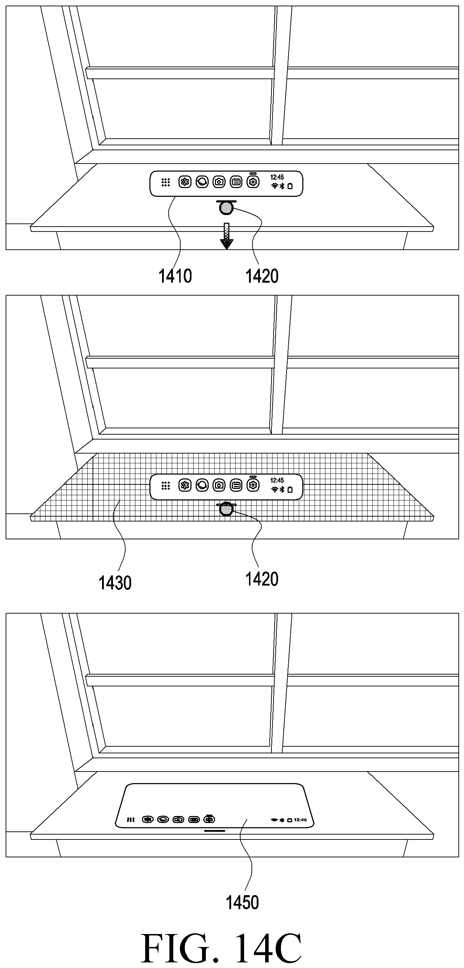

According to an embodiment, an embodiment of indicating an area where a virtual object may be disposed is described below with reference to FIGS. 14C and 15B.

According to an embodiment, if a virtual object related to a second application different from a first application related to a virtual object of a first shape approaches the virtual object of the first shape, with the virtual object of the first shape displayed, the wearable electronic device may automatically sort around the virtual object of the first shape. For example, if the second virtual object approaches around the first virtual object with the first virtual object displayed, the wearable electronic device may automatically sort the second virtual object although not positioned with the first virtual object by a user input. According to an embodiment, the wearable electronic device may change the shape of the second virtual object approaching around the first virtual object into the first shape and sort it around the first virtual object.

According to an embodiment, if the second virtual object approaches the left or right of the first virtual object, the wearable electronic device may sort the second virtual object in a manner in which the second virtual object is attached to a side of the first virtual object.

According to an embodiment, the wearable electronic device may further display a virtual object indicating that the virtual object of the first shape (e.g., first virtual object) and the virtual object (e.g., second virtual object) related to the second application are grouped. For example, the wearable electronic device may further display a virtual object of a support shape to fix the first virtual object and the second virtual object.

According to an embodiment, if the second virtual object approaches the left or bottom of the first virtual object, the wearable electronic device may sort the second virtual object in a manner in which the second virtual object is attached to the top or bottom of the first virtual object. According to an embodiment, if the second virtual object approaches the left or bottom of the first shape of first virtual object, the wearable electronic device may change the first shape of first virtual object into a virtual object of a third shape to display the first virtual object and the second virtual object to be stacked one over the other. According to an embodiment, the wearable electronic device may change the second virtual object into the third shape and sort the second virtual object to be attached to the left or bottom of the virtual object of the third shape. For example, when the first shape is shaped to surround one side and bottom to be fixed to the bottom and wall, the third shape may be shaped to surround the top, one side, and bottom to have another virtual object stacked thereon.

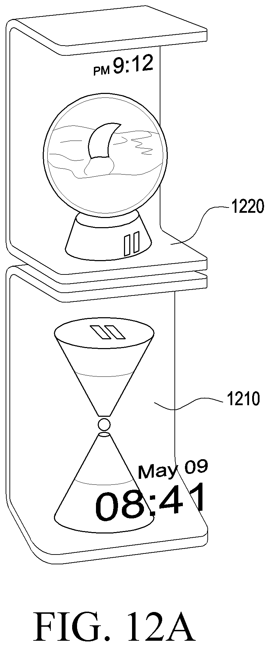

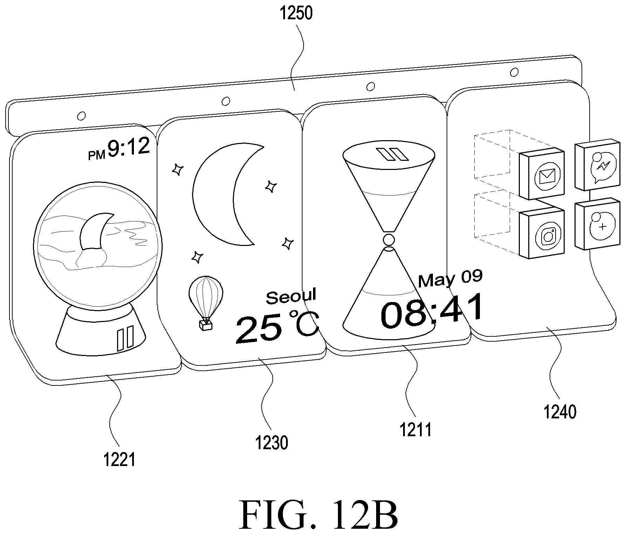

According to an embodiment, an embodiment of sorting a first virtual object and a second virtual object is described below with reference to FIGS. 12A and 12B.

FIG. 8 is a view illustrating an operation of displaying a virtual object of a different shape based on the shape of an area in a wearable electronic device according to an embodiment of the disclosure.

Referring to FIG. 8, a wearable electronic device (e.g., the electronic device 101 of FIG. 1, the processor 120 of FIG. 1, the electronic device 200 of FIG. 2, or the electronic device 400 of FIG. 6) may move a virtual object 810 of a first shape. According to an embodiment, the virtual object 810 of the first shape may be shaped as being disposed in the air. According to an embodiment, the virtual object 810 of the first shape may be moving in the air or, although not disposed in the air, be being moved in the air by a user input to move the virtual object. According to an embodiment, the virtual object 810 of the first shape may be a widget of a weather application. According to an embodiment, the virtual object 810 of the first shape may include temperature information (e.g., 23 degrees), date information (e.g., Mon 09 October), location information (e.g., Berlin/Germany), time information (e.g., 10:15 AM) and/or first image information (e.g., 2D and/or 3D image information) having a shape of floating on a cloud.

According to an embodiment, upon receiving a user input to dispose the virtual object 810 of the first shape in an area in the air, the wearable electronic device may fix the virtual object 810 of the first shape which remains in shape, in one area in the air.

According to an embodiment, upon receiving a user input to dispose the virtual object 810 of the first shape in one area of a wall, the wearable electronic device may change the virtual object 810 of the first shape into a virtual object 820 of a second shape and fix the virtual object 820 of the second shape in one area of the wall. According to an embodiment, the virtual object 820 of the second shape may include temperature information (e.g., 23 degrees), date information (e.g., Mon 09 October), time information (e.g., 10:15 AM) and/or second image information (e.g., 2D and/or 3D image information) having a shape of a frame hanging on the wall. According to an embodiment, the information included in the virtual object 820 of the second shape may be the same as or partially different from the information included in the virtual object 810 of the first shape.

According to an embodiment, upon receiving a user input to dispose the virtual object 810 of the first shape in one area of a bottom (e.g., floor or table top), the wearable electronic device may change the virtual object 810 of the first shape into a virtual object 830 of a third shape and fix the virtual object 830 of the third shape in one area of the bottom. According to an embodiment, the virtual object 830 of the third shape may include temperature information (e.g., 23 degrees), date information (e.g., Mon 09 October), time information (e.g., 10:15 AM) and/or third image information (e.g., 2D and/or 3D image information) having a shape of an object placed on the bottom. According to an embodiment, the information included in the virtual object 830 of the third shape may be the same as or partially different from the information included in the virtual object 810 of the first shape and/or the virtual object 820 of the second shape.

Although FIG. 8 only illustrates an embodiment in which the virtual object 810 of the first shape is changed into another shape, according to an embodiment, the virtual object 820 of the second shape or virtual object 830 of the third shape may be changed into another shape.

FIG. 9 is a view illustrating an operation of displaying a virtual object of a different shape based on the shape of an area in a wearable electronic device according to an embodiment of the disclosure.

Referring to FIG. 9, a wearable electronic device (e.g., the electronic device 101 of FIG. 1, the processor 120 of FIG. 1, the electronic device 200 of FIG. 2, or the electronic device 400 of FIG. 6) may move a virtual object 910 of a first shape. According to an embodiment, the virtual object 910 of the first shape may be shaped as being disposed in the air. According to an embodiment, the virtual object 910 of the first shape may be moving in the air or, although not disposed in the air, be being moved in the air by a user input to move the virtual object. According to an embodiment, the virtual object 910 of the first shape may be a widget of a clock application. According to an embodiment, the virtual object 910 of the first shape may include date information (e.g., May 09), time information (e.g., 08:41) and/or first image information (e.g., 2D and/or 3D image information) having a hourglass shape.

According to an embodiment, upon receiving a user input to dispose the virtual object 910 of the first shape in an area in the air, the wearable electronic device may fix the virtual object 910 of the first shape which remains in shape, in one area in the air.

According to an embodiment, upon receiving a user input to dispose the virtual object 910 of the first shape in one area of a wall, the wearable electronic device may change the virtual object 910 of the first shape into a virtual object 920 of the second shape and fix the virtual object 920 of the second shape in one area of the wall. According to an embodiment, the virtual object 920 of the second shape may include date information (e.g., May 09), time information (e.g., 08:41), hourglass-shaped first image information (e.g., 2D and/or 3D image information), and/or second image information (e.g., 2D and/or 3D image information) including a bottom supporting the hourglass and a side for fixing to the wall. According to an embodiment, the information included in the virtual object 920 of the second shape may be the same as or partially different from the information included in the virtual object 910 of the first shape.

According to an embodiment, upon receiving a user input to dispose the virtual object 910 of the first shape in one area of a bottom (e.g., floor or table top), the wearable electronic device may change the virtual object 910 of the first shape into a virtual object 930 of a third shape and fix the virtual object 930 of the third shape in one area of the bottom. According to an embodiment, the virtual object 930 of the third shape may include date information (e.g., May 09), time information (e.g., 08:41), hourglass-shaped first image information (e.g., 2D and/or 3D image information), and/or third image information (e.g., 2D and/or 3D image information) including a bottom supporting the hourglass. According to an embodiment, the information included in the virtual object 930 of the third shape may be the same as or partially different from the information included in the virtual object 910 of the first shape and/or the virtual object 920 of the second shape.

According to an embodiment, if another virtual object is allowed to approach the top or bottom of the virtual objects 910 to 930 of the first shape to third shape with the virtual objects 910 to 930 of the first shape to third shape fixed in the air or to the wall or bottom, the wearable electronic device may change the virtual objects 910 to 930 of the first to third shapes into a virtual object 940 of a fourth shape. According to an embodiment, the virtual object 940 of the fourth shape may include date information (e.g., May 09), time information (e.g., 08:41), hourglass-shaped first image information (e.g., 2D and/or 3D image information), and/or fourth image information (e.g., 2D and/or 3D image information) including a bottom supporting the hourglass, top for stacking another virtual object thereon, and/or a side connecting the top and bottom. According to an embodiment, the information included in the virtual object 940 of the fourth shape may be the same as or partially different from the information included in the virtual object 910 of the first shape, the virtual object 920 of the second shape, and/or the virtual object 930 of the third shape.

Although FIG. 9 only illustrates an embodiment in which the virtual object 910 of the first shape is changed into another shape, according to an embodiment, one of the virtual object 920 of the second shape to the virtual object 940 of the fourth shape may be changed into another shape.

FIG. 10 is a view illustrating an embodiment in which the shape of a virtual object is changed depending on the shape of an area where the virtual object is disposed, when the virtual object is moved, in a wearable electronic device according to an embodiment of the disclosure.

Referring to FIG. 10, a wearable electronic device (e.g., the electronic device 101 of FIG. 1, the processor 120 of FIG. 1, the electronic device 200 of FIG. 2, or the electronic device 400 of FIG. 6) may display a virtual object 1010 having a board shape in the air on the desk. According to an embodiment, the virtual object 1010 of the board shape may be a widget of a weather application and be displayed together with other widgets.

According to an embodiment, based on receiving a user input to select and move the virtual object 1010 of the board shape to the wall, if the virtual object 1010 approaches the wall before the user input is complete, it may be changed into a virtual object 1020 having a shape corresponding to the wall and displayed. According to an embodiment, the virtual object 1020 having the shape corresponding to the wall, displayed before the user input is complete, may be one produced by changing the shape to correspond to the wall while maintaining the image included in the virtual object 1010 of the board shape. As such, the wearable electronic device may provide the moving position and shape of the virtual object to the user to be pre-checked by the user.

According to an embodiment, if the user input to dispose the virtual object on the wall is complete, the wearable electronic device may fix a virtual object 1030 having a window shape corresponding to the wall. According to an embodiment, the virtual object 1030 of the window shape may include an external image reflecting weather information.

FIG. 10 illustrates that the virtual object reshaped before the user input is complete includes the image before reshaping but, according to an embodiment, it may also include the image after reshaping.

FIG. 11A is a view illustrating an embodiment in which the shape of a virtual object is changed depending on the shape of an area where the virtual object is disposed, when the virtual object is moved, in a wearable electronic device according to an embodiment of the disclosure.

FIG. 11B is a view illustrating an embodiment in which the shape of a virtual object is changed depending on the shape of an area where the virtual object is disposed, when the virtual object is moved, in a wearable electronic device according to an embodiment of the disclosure.

FIG. 11C is a view illustrating an embodiment in which the shape of a virtual object is changed depending on the shape of an area where the virtual object is disposed, when the virtual object is moved, in a wearable electronic device according to an embodiment of the disclosure.

Referring to FIG. 11A, a wearable electronic device (e.g., the electronic device 101 of FIG. 1, the processor 120 of FIG. 1, the electronic device 200 of FIG. 2, or the electronic device 400 of FIG. 6) may display a plurality of virtual objects 1110 having board shapes in the air on the desk. According to an embodiment, the plurality of virtual objects 1110 may be a plurality of widgets respectively corresponding to a plurality of applications.

According to an embodiment, the plurality of virtual objects 1110 may be ones combined by the manufacturer or by a user input.

According to an embodiment, the wearable electronic device may receive a user input 1120 to select a first virtual object 1111 among the plurality of virtual objects 1110. For example, the first virtual object 1111 may be a virtual object corresponding to a photo album application (or gallery application).

According to an embodiment, the wearable electronic device may separate the first virtual object 1111 from the plurality of virtual objects 1110 and move it according to a user input to move the selected first virtual object 1111. According to an embodiment, the wearable electronic device may display an indicator on the first virtual object 1111 to indicate that the first virtual object 1111 is being controlled by the user input.

Referring to FIG. 11B, upon receiving a user input to move the first virtual object (e.g., the first virtual object 1111 of FIG. 11A) onto the desk top, the wearable electronic device may display a second virtual object 1130 which is one shrunken from the board shape of first virtual object.

According to an embodiment, the wearable electronic device may change the board shape of first virtual object into a third virtual object 1140 having a desktop photo frame shape before the user input is complete. According to an embodiment, the third virtual object 1140 may have a desktop photo frame shape, and the indicator indicating that it is being controlled by the user input may be maintained.

According to an embodiment, if the user input is complete, the electronic device may fix a fourth virtual object 1150 having a desktop photo frame shape in one area of the desktop.

Referring to FIG. 11C, upon receiving a user input to move the first virtual object (e.g., the first virtual object 1111 of FIG. 11A) to the wall, the wearable electronic device may change it into a fifth virtual object 1160 having a shape corresponding to the wall before the user input is complete. According to an embodiment, the fifth virtual object 1160 may be displayed in the position where the virtual object is to be displayed, and the indicator indicating that it is being controlled by the user input may be displayed.

According to an embodiment, if the user input is complete, the electronic device may fix a sixth virtual object 1170 having a photo frame shape in one area of the wall.

FIG. 12A is a view illustrating a layout of a plurality of virtual objects when there are the plurality of virtual objects according to an embodiment of the disclosure. For example, FIG. 12A is a view illustrating an embodiment in which a second virtual object is disposed over or under a first virtual object.

Referring to FIG. 12A, a wearable electronic device (e.g., the electronic device 101 of FIG. 1, the processor 120 of FIG. 1, the electronic device 200 of FIG. 2, or the electronic device 400 of FIG. 6) may display a second virtual object 1220 over a first virtual object based on a user input to dispose the second virtual object 1220 over the first virtual object 1210 while the first virtual object 1210 is displayed. According to an embodiment, the application corresponding to the first virtual object 1210 may differ from the application corresponding to the second virtual object 1220.

According to an embodiment, if the second virtual object 1220 approaches above the first virtual object 1210 by a user input, the wearable electronic device may automatically sort the position of the first virtual object 1210 even without the user's repositioning of the second virtual object to be sorted with the position of the first virtual object 1210.

According to an embodiment, if the second virtual object is rendered to approach above (or under) the first shape to third shape of first virtual objects with the first shape to third shape of first virtual objects (e.g., 910 to 930 of FIG. 9) shown in FIG. 9 fixed in the air or to the wall or bottom, the wearable electronic device may change the first shape to third shape of first virtual objects into a first virtual object (e.g., 940 of FIG. 9) of a fourth shape surrounding the tops, sides, and bottoms of the first shape to third shape of first virtual obj ects.

According to an embodiment, the wearable electronic device may also change the second virtual object 1220 into a fourth shape surrounding the top, side, and bottom, and display the fourth shape of second virtual object 1220 above the first virtual object 1210.

FIG. 12B is a view illustrating a layout of a plurality of virtual objects when there are the plurality of virtual objects according to an embodiment of the disclosure. For example, FIG. 12B is a view illustrating an embodiment in which a second virtual object is disposed on the left or right of a first virtual object.

Referring to FIG. 12B, the wearable electronic device may dispose the second to fourth virtual objects 1221, 1230, and 1240 on the left or right of the first virtual object 1211 based on a user input to dispose the second virtual object 1221 on the left or right of the first virtual object 1211 with the first virtual object 1211 displayed. According to an embodiment, the application corresponding to the first virtual object 1211 may differ from the application corresponding to each of the second to fourth virtual objects 1221, 1230, and 1240.

According to an embodiment, if the fourth virtual object is rendered to approach the right side of the first virtual object with the second shape of first virtual object (e.g., 920 of FIG. 9) shown in FIG. 9 fixed to the wall, the wearable electronic device may maintain the shape of the second shape of fourth virtual object 1240 and change another shape of fourth virtual object into the second shape of fourth virtual object 1240, automatically sorting it based on the position of the second shape of first virtual object 1221. According to an embodiment, the second shape may be a shape surrounding the side and bottom.

According to an embodiment, while the second shape of first virtual object 1211 is displayed, the third virtual object 1230 approaches the left side of the first virtual object 1211, and the fourth virtual object 1240 approaches the right side of the first virtual object 1211, so that they may be automatically sorted. According to an embodiment, after the third virtual object 1230 is sorted, the second virtual object 1221 may approach the left side of the third virtual object 1230 and be automatically sorted.

According to an embodiment, while the virtual object 1211 of the second shape is displayed, the second virtual object 1221 approaches the left side of the first virtual object 1211, and the fourth virtual object 1240 approaches the right side of the first virtual object 1211, so that they may be automatically sorted. According to an embodiment, after the second virtual object 1221 is sorted, the third virtual object 1230 may approach between the first virtual object 1211 and the second virtual object 1221 and be automatically sorted.

According to an embodiment, when a plurality of virtual objects 1211, 1221, 1230, and 1240 are sorted, the wearable electronic device may further display a virtual object 1250 indicating that the plurality of virtual objects 1211, 1221, 1230, and 1240 are grouped. For example, the wearable electronic device may further display a virtual object 1250 of a support shape and display the plurality of virtual objects 1211, 1221, 1230, and 1240 as fixed to thevirtual object 1250 of the support shape.

FIG. 13A is a view illustrating a virtual object of a first shape disposed in the air according to an embodiment of the disclosure. For example, FIG. 13A is a view illustrating an embodiment in which a widget related to a multi-interaction function (e.g.,, task bar or home screen interface) is fixed in the air.

Referring to FIG. 13A, a wearable electronic device (e.g., the electronic device 101 of FIG. 1, the processor 120 of FIG. 1, the electronic device 200 of FIG. 2, or the electronic device 400 of FIG. 6) may display a virtual object 1310 of a first shape shaped as a bar. According to an embodiment, the virtual object of the first shape may include a first icon 1311 for displaying icons of all the applications installed on the wearable electronic device, at least one second icon 1312 corresponding to at least one application currently running, time information 1313, notification and/or status information 1314, and/or a handler icon 1315 for moving the virtual object of the first shape.

According to an embodiment, at least one second icon 1312 included in the virtual object of the first shape 1310 may be a 2D icon.

FIG. 13B is a view illustrating a virtual object of a second shape disposed on a bottom according to an embodiment of the disclosure. FIG. 13B is a view illustrating an embodiment in which a widget related to a multi-interaction function (e.g., task bar or home screen interface) is fixed to the table top.

Referring to FIG. 13B, the wearable electronic device may display a virtual object 1320 of the second shape shaped as a board. According to an embodiment, the virtual object of the first shape may include a first icon 1321 for displaying icons of all the applications installed on the wearable electronic device, at least one second icon 1322 corresponding to at least one application currently running, time information 1323, notification and/or status information 1324, a handler icon 1325 for moving the virtual object of the second shape, at least one 3D icon 1326 (e.g., 3D widget), and a 2D icon 1327 (e.g., 2D widget).

As such, the number and/or type of icons included may differ although corresponding to the same application or function depending on the shape of the virtual object.

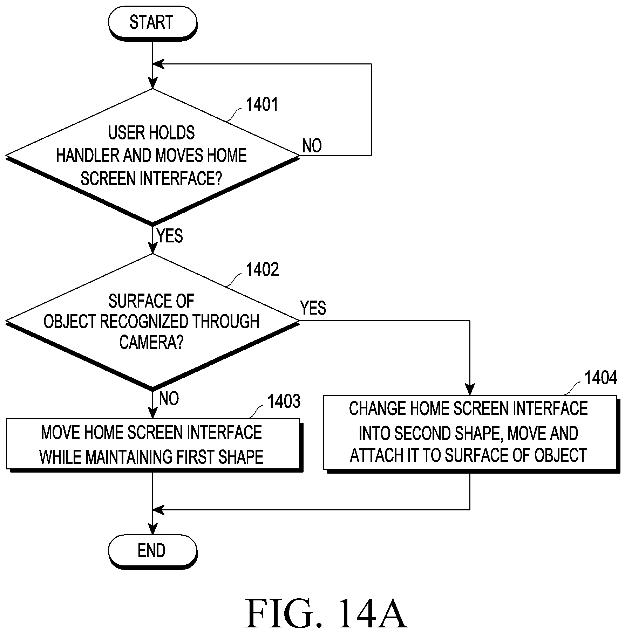

FIG. 14A is a flowchart illustrating operations when the virtual object of the first shape shown in FIG. 13A is moved according to an embodiment of the disclosure.

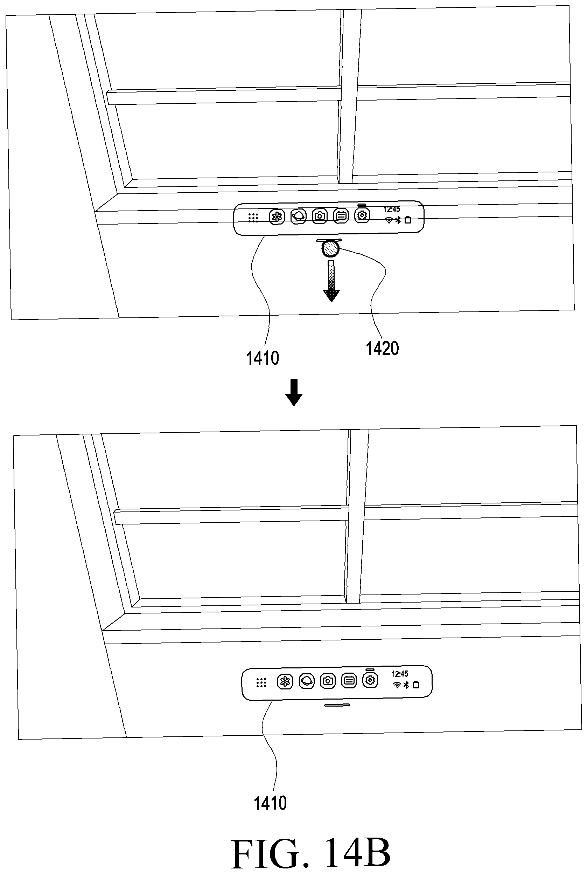

FIG. 14B is a view illustrating an embodiment in which a virtual object of a first shape remains in shape even when moved according to an embodiment of the disclosure.

FIG. 14C is a view illustrating an embodiment in which a virtual object of a first shape is changed into a second shape when moved according to an embodiment of the disclosure.

Referring to FIG. 14A, in operation 1401, the wearable electronic device (e.g., the electronic device 101 of FIG. 1, the processor 120 of FIG. 1, the electronic device 200 of FIG. 2, or the electronic device 400 of FIG. 6) may identify whether the user holds the handler and moves the home screen interface (e.g., virtual object related to the multi-interaction function).

According to an embodiment, the home screen interface may have a first shape which is a bar shape.

According to an embodiment, if the home screen interface is not moved by a user input (no in operation 1401), the wearable electronic device may return to operation 1401 to continuously identify whether the home screen interface is moved.

According to an embodiment, if the home screen interface is moved by a user input (yes in operation 1401), the wearable electronic device may identify whether the surface of an object is recognized through a camera (e.g., the camera module 180 of FIG. 1) in operation 1402. According to an embodiment, identifying whether the surface of the object is recognized may be identifying at least one area where the home screen interface, which is a virtual object, may be disposed.

According to an embodiment, if the surface of the object is not recognized (no in operation 1402), the wearable electronic device may control to move the home screen interface while maintaining the first shape as shown in 14B.

Referring to FIG. 14B, upon receiving a user input to hold the handler of the first shape of home screen interface 1410 fixed in the air and move it in the negative Y-axis direction, the wearable electronic device may identify whether the surface of the object is recognized through the camera. According to an embodiment, if the surface of the object is not recognized, the wearable electronic device may move the position of the first shape of home screen interface 1410 in the negative Y-axis direction while maintaining the shape.

Referring back to FIG. 14A, if the surface of the object is recognized (yes in operation 1402), the wearable electronic device may change the home screen interface into a second shape and move, and attach it to the surface of the object as shown in 14C.

Referring to FIG. 14C, upon receiving a user input 1420 to hold the handler of the first shape of home screen interface 1410 fixed in the air and move it in the negative Y-axis direction, the wearable electronic device may identify whether the surface of the object is recognized through the camera. According to an embodiment, if the first shape of home screen interface 1410 approaches the object (e.g., desk) according to the information 1420 and the surface of the object is recognized, the wearable electronic device may display an object 1430 indicating that a virtual object may be disposed on the surface of the object. According to an embodiment, the object 1430 indicating that a virtual object may be disposed may have a grid shape.

According to an embodiment, if the user input to dispose the virtual object on the surface of the object is complete, the wearable electronic device may replace the virtual object of the first shape with the virtual object 1450 of the second shape shaped as a board and fix the virtual object of the second shape to the surface of the object.

FIG. 15A is a flowchart illustrating an operation of adding an icon to a displayed virtual object according to an embodiment of the disclosure.

FIG. 15B is a view illustrating an operation of adding an icon to a virtual object of a first shape according to an embodiment of the disclosure.

FIG. 15C is a view illustrating an operation of adding an icon to a virtual object of a second shape according to an embodiment of the disclosure.

Referring to FIG. 15A, in operation 1501, the wearable electronic device (e.g., the electronic device 101 of FIG. 1, the processor 120 of FIG. 1, the electronic device 200 of FIG. 2, or the electronic device 400 of FIG. 6) may open a widget list through an app list button included in the home screen interface (e.g., virtual object related to the multi-interaction function). According to an embodiment, the widget list may include at least one widget that may be added to the home screen interface. According to an embodiment, the widget list may include 2D widgets and/or 3D widgets.

According to an embodiment, in operation 1502, the wearable electronic device may grab a widget in the list and move it to the home screen interface based on a user input.

According to an embodiment, in operation 1503, the wearable electronic device may identify whether the home screen interface has a first shape. According to an embodiment, the wearable electronic device may identify whether the home screen interface has a first shape which is a bar shape.

According to an embodiment, if the home screen interface has a first shape which is a bar shape (yes in operation 1503), the wearable electronic device may attach the widget to the world coordinates in operation 1504. According to an embodiment, attaching to the world coordinates may be fixing the widget in the virtual space, rather than moving it along with the user.

According to an embodiment, the operation of adding a widget when the home screen interface has the first shape is further described below with reference to FIG. 15B.

According to an embodiment, if the home screen interface has a second shape which is a board shape (no in operation 1503), the wearable electronic device may display a grid for placing the widget on the home screen interface in operation 1505.

According to an embodiment, in operation 1506, the wearable electronic device may select the grid and sort the widget on the home screen interface. According to an embodiment, if a user input to dispose the widget in one area of the displayed grid is complete, the widget may be fixed in one area of the grid, and the grid may be deleted.

According to an embodiment, the operation of adding a widget when the home screen interface has the second shape is further described below with reference to FIG. 15C.

Referring to FIG. 15B, the wearable electronic device may display a widget list 1520 through an app list button 1511 included in a bar-shaped home screen interface 1510 (e.g., virtual object related to the multi-interaction function).

According to an embodiment, upon receiving a user input 1530 to select a first widget 1521 in the widget list 1520 and move it onto the home screen interface, the wearable electronic device may move the first widget 1521 onto the home screen interface. According to an embodiment, the first widget 1521 may include an indicator 1522 indicating that the 2D/3D image related to the application corresponding to the first widget 1521 and the first widget 1521 are being controlled by the user.

According to an embodiment, if the user input to dispose the first widget 1521 on the home screen interface is complete, the wearable electronic device may fix the first widget 1521 onto one area of the home screen interface.

Referring to FIG. 15C, the wearable electronic device may display a widget list 1550 through an app list button 1541 included in a board-shaped home screen interface 1540 (e.g., virtual object related to the multi-interaction function).

According to an embodiment, upon receiving a user input 1560 to select a first widget 1551 in the widget list 1550 and move it onto the home screen interface, the wearable electronic device may move the first widget 1551 onto the home screen interface. According to an embodiment, the first widget 1551 may include an indicator 1552 indicating that the 2D/3D image related to the application corresponding to the first widget 1551 and the first widget 1521 are being controlled by the user.

According to an embodiment, if the first widget 1551 approaches the home screen interface based on a user input, the wearable electronic device may display a grid 1542 in the area where a widget may be disposed, of the home screen interface.

According to an embodiment, if the user input to dispose the first widget 1551 in one area of the displayed grid 1542 is complete, the wearable electronic device may fix the first widget 1551 onto one area of the home screen interface.

FIGS. 15B and 15C illustrate that the added first widgets 1521 and 1551 have the same shape although the home screen interfaces have different shapes. However, according to an embodiment, on the first shape of home screen interface, the first widget 1521 may be a 2D icon and, on the second shape of home screen interface, the first widget 1551 may be a 3D icon.

FIG. 16A is a view illustrating an embodiment in which a virtual object is fixed to a user according to an embodiment of the disclosure.

Referring to FIG. 16A, a wearable electronic device (e.g., the electronic device 101 of FIG. 1, the processor 120 of FIG. 1, the electronic device 200 of FIG. 2, or the electronic device 400 of FIG. 6) may fix (e.g., body leash or body lock) a virtual object 1610 of a first shape to the user. According to an embodiment, fixing to the user may be fixing the virtual object in a predetermined area of the screen although the field of view is changed due to the user's movement and/or motion.

According to an embodiment, if the user turns her head so that the field of view is changed while the bar-shaped virtual object 1610 of the first shape is fixed in the air above the desk 1620, the desk 1620 is displayed as moved to the left, but the virtual object 1610 of the first shape may remain in the same position in the screen.

FIG. 16B is a view illustrating an embodiment in which a virtual object is fixed in a virtual space according to an embodiment of the disclosure.

Referring to FIG. 16B, the wearable electronic device may fix (e.g., world lock) the virtual object 1630 of the second shape in the virtual space. According to an embodiment, fixing in the virtual space may be moving the virtual object displayed in the screen based on the user's movement and/or motion when the field of view is changed due to the user's movement and/or motion.

According to an embodiment, if the user turns her head so that the field of view is changed while the board-shaped virtual object 1630 of the second shape is fixed to the desk 1620, the virtual object 1630 of the second shape may be displayed as moved along with the desk 1620.

According to an embodiment, a wearable electronic device (e.g., the electronic device 101 of FIG. 1, the electronic device 200 of FIG. 2, or the electronic device 400 of FIG. 6) may comprise a display (e.g., the display module 160 of FIG. 1, the display member 201 of FIGS. 2 to 5, or the display member 440 of FIG. 4), a camera (e.g., the camera module 180 of FIG. 1, the second camera module 253 of FIGS. 3 to 5, or the third camera module 255 of FIGS. 3 to 5), and at least one processor (e.g., the processor 120 of FIG. 1) operatively connected with the display and the camera.

According to an embodiment, the at least one processor may analyze (710) a real space based on an image obtained through the camera.

According to an embodiment, the at least one processor may obtain (720) a plurality of areas where a virtual object may be displayed based on a result of the analysis.

According to an embodiment, the at least one processor may identify (730) a shape of a first area among the plurality of areas based on receiving a first user input for displaying a virtual object.

According to an embodiment, the at least one processor may identify (740) at least one function corresponding to a shape of the first area related to a virtual object and a first shape of the virtual object corresponding to the shape of the first area.

According to an embodiment, the at least one processor may display (750) the virtual object of the first shape including at least one icon respectively corresponding to the at least one function.

According to an embodiment, the at least one processor may replace with a virtual object of a second shape different from the first shape and corresponding to a shape of the second area based on receiving a second user input for moving the virtual object of the first shape, displayed in the first area, to the second area different from the first area.

According to an embodiment, at least one of the type of corresponding function or number of at least one icons included in the virtual object of the second shape may differ from the virtual object of the first shape.

According to an embodiment, an icon corresponding to a first function included in the virtual object of the first shape may be a 2D icon.

According to an embodiment, the icon corresponding to the first function included in the virtual object of the second shape may be a 3D icon.

According to an embodiment, the at least one processor may add a 2D icon related to a second function to the virtual object of the first shape, based on receiving a third user input for adding the icon related to the second function to the virtual object of the first shape.

According to an embodiment, the at least one processor may add a 3D icon related to the second function to the virtual object of the second shape, based on receiving the third user input for adding the icon related to the second function to the virtual object of the second shape.

According to an embodiment, the at least one processor may replace the virtual object of the first shape with the virtual object of the second shape, based on approach of the virtual object of the first shape from the first area to around the second area through the second user input.

According to an embodiment, the at least one processor may fix the virtual object of the second shape in the second area if the second user input is complete.

According to an embodiment, the at least one processor may display a virtual object indicating that a virtual object may be fixed in the second area, based on approach of the virtual object of the first shape from the first area to around the second area through the second user input.

According to an embodiment, the at least one processor may, if a virtual object related to a second application different from a first application related to the virtual object of the first shape approaches the virtual object of the first shape with the virtual object of the first shape displayed, automatically sort the virtual object related to the second application in an area around the virtual object of the first shape.

According to an embodiment, the at least one processor may further display a virtual object indicating that the virtual object of the first shape and the sorted virtual object related to the second application are grouped.

According to an embodiment, the first area may have a bottom shape, a wall shape, or an in-air shape.

According to an embodiment, the second area may have a shape different from the first shape, among the bottom shape, the wall shape, or the in-air shape.

According to an embodiment, a method for controlling a wearable electronic device may comprise analyzing a real space based on an image obtained through a camera.

According to an embodiment, the method for controlling the wearable electronic device may comprise obtaining a plurality of areas where a virtual object may be displayed based on a result of the analysis.

According to an embodiment, the method for controlling the wearable electronic device may comprise identifying a shape of a first area among the plurality of areas, based on receiving a first user input for displaying a virtual object.

According to an embodiment, the method for controlling the wearable electronic device may comprise identifying a first shape of a virtual object corresponding to the shape of the first area and at least one function corresponding to the shape of the first area related to the virtual object.

According to an embodiment, the method for controlling the wearable electronic device may comprise displaying the virtual object of the first shape including at least one icon respectively corresponding to the at least one function.

According to an embodiment, the method for controlling the wearable electronic device may further comprise replacing the virtual object of the first shape displayed in the first area with a virtual object of a second shape different from the first shape and corresponding to a shape of a second area different from the first area, based on receiving a second user input to move the virtual object of the first shape to the second area.

According to an embodiment, at least one of the type of corresponding function or number of at least one icons included in the virtual object of the second shape may differ from the virtual object of the first shape.

According to an embodiment, an icon corresponding to a first function included in the virtual object of the first shape may be a 2D icon.

According to an embodiment, the icon corresponding to the first function included in the virtual object of the second shape may be a 3D icon.

According to an embodiment, the method for controlling the wearable electronic device may add a 2D icon related to a second function to the virtual object of the first shape, based on receiving a third user input for adding the icon related to the second function to the virtual object of the first shape.

According to an embodiment, the method for controlling the wearable electronic device may further comprise adding a 3D icon related to the second function to the virtual object of the second shape, based on receiving the third user input for adding the icon related to the second function to the virtual object of the second shape.

According to an embodiment, replacing with the virtual object of the second shape different from the first shape further may replace the virtual object of the first shape with the virtual object of the second shape, based on approach of the virtual object of the first shape from the first area to around the second area through the second user input.

According to an embodiment, replacing with the virtual object of the second shape different from the first shape may further include fixing the virtual object of the second shape in the second area if the second user input is completed.

According to an embodiment, the method for controlling the wearable electronic device may further comprise displaying a virtual object indicating that a virtual object may be fixed in the second area, based on approach of the virtual object of the first shape from the first area to around the second area through the second user input.

According to an embodiment, the method for controlling the wearable electronic device may further comprise, if a virtual object related to a second application different from a first application related to the virtual object of the first shape approaches the virtual object of the first shape with the virtual object of the first shape displayed, automatically sorting the virtual object related to the second application in an area around the virtual object of the first shape.

According to an embodiment, the method for controlling the wearable electronic device may further comprise displaying a virtual object indicating that the virtual object of the first shape and the sorted virtual object related to the second application are grouped.

According to an embodiment, the first area may have a bottom shape, a wall shape, or an in-air shape.

According to an embodiment, the second area may have a shape different from the first shape, among the bottom shape, the wall shape, or the in-air shape.

According to an embodiment, in a non-transitory computer-readable recording medium storing one or more programs, the one or more programs may include instructions that enable a wearable electronic device to analyze a real space based on an image obtained through a camera.

According to an embodiment, the one or more programs may include instructions that enable the wearable electronic device to obtain a plurality of areas where a virtual object may be displayed based on a result of the analysis.

According to an embodiment, the one or more programs may include instructions that enable the wearable electronic device to identify a shape of a first area among the plurality of areas, based on receiving a first user input for displaying a virtual object.

According to an embodiment, the one or more programs may include instructions that enable the wearable electronic device to identify a first shape of a virtual object corresponding to the shape of the first area and at least one function corresponding to the shape of the first area related to the virtual object.

According to an embodiment, the one or more programs may include instructions that enable the wearable electronic device to display the virtual object of the first shape including at least one icon respectively corresponding to the at least one function.

According to an embodiment, the one or more programs may include instructions that enable the wearable electronic device to replace the virtual object of the first shape displayed in the first area with a virtual object of a second shape different from the first shape and corresponding to a shape of a second area different from the first area, based on receiving a second user input to move the virtual object of the first shape to the second area.

According to an embodiment, at least one of the type of corresponding function or number of at least one icons included in the virtual object of the second shape may differ from the virtual object of the first shape.

According to an embodiment, an icon corresponding to a first function included in the virtual object of the first shape may be a 2D icon.

According to an embodiment, the icon corresponding to the first function included in the virtual object of the second shape may be a 3D icon.

According to an embodiment, the one or more programs may include instructions that enable the wearable electronic device to add a 2D icon related to a second function to the virtual object of the first shape, based on receiving a third user input for adding the icon related to the second function to the virtual object of the first shape.

According to an embodiment, the one or more programs may include instructions that enable the wearable electronic device to add a 3D icon related to the second function to the virtual object of the second shape, based on receiving the third user input for adding the icon related to the second function to the virtual object of the second shape.

According to an embodiment, the one or more programs may include instructions that enable the wearable electronic device to replace the virtual object of the first shape with the virtual object of the second shape, based on approach of the virtual object of the first shape from the first area to around the second area through the second user input.

According to an embodiment, the one or more programs may include instructions that enable the wearable electronic device to fix the virtual object of the second shape in the second area if the second user input is complete.

According to an embodiment, the one or more programs may include instructions that enable the wearable electronic device to display a virtual object indicating that a virtual object may be fixed in the second area, based on approach of the virtual object of the first shape from the first area to around the second area through the second user input.

According to an embodiment, the one or more programs may include instructions that enable the wearable electronic device to, if a virtual object related to a second application different from a first application related to the virtual object of the first shape approaches the virtual object of the first shape with the virtual object of the first shape displayed, automatically sort the virtual object related to the second application in an area around the virtual object of the first shape.

According to an embodiment, the one or more programs may include instructions that enable the wearable electronic device to further display a virtual object indicating that the virtual object of the first shape and the sorted virtual object related to the second application are grouped.

According to an embodiment, the first area may have a bottom shape, a wall shape, or an in-air shape.

According to an embodiment, the second area may have a shape different from the first shape, among the bottom shape, the wall shape, or the in-air shape.

The electronic device according to an embodiment of the disclosure may be one of various types of electronic devices.The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment.With regard to the description of the drawings, similar reference numerals may be used to refer to similar or related elements.It is to be understood that a singular form of a noun corresponding to an item may include one or more of the things, unless the relevant context clearly indicates otherwise.As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry".A module may be a single integral component, or a minimum unit or part thereof, adapted to perform one or more functions.For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101).For example, a processor (e.g., the processor 120) of the machine (e.g., the electronic device 101) may invoke at least one of the one or more instructions stored in the storage medium, and execute it, with or without using one or more other components under the control of the processor.This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly.If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component.In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (101, 200, or 400) comprising:
a display (160, 201, or 440);
a camera (180,253, or 255); and
at least one processor (120) operatively connected with the display and the camera;
wherein the at least one processor is configured to:
based on an image obtained through the camera, analyze (710) a real space,
based on a result of the analyzed real space, obtain (720) a plurality of areas where a virtual object is displayable,
based on receiving a first user input for displaying the virtual object, identify (730) a shape of a first area among the plurality of areas,
identify (740) a first shape of a virtual object corresponding to the shape of the first area,
identify at least one function related to the virtual object and corresponding to the shape of the first area, and
display (750) the virtual object of the first shape comprising at least one icon corresponding to the at least one function.

2. The wearable electronic device of claim 1, wherein the at least one processor is further configured to:
based on receiving a second user input to move the virtual object of the first shape to a second area that is different from the first area, replace the virtual object of the first shape displayed in the first area with a virtual object of a second shape that is different from the first shape corresponding to the shape of the second area.

3. The wearable electronic device of claim 2, wherein at least one of one or more icons included in the virtual object of the second shape or type of a function corresponding to the virtual object of the second shape is different from that of the virtual object of the first shape.

4. The wearable electronic device of claim 2 or claim 3, wherein an icon corresponding to a first function included in the virtual object of the first shape is a 2D icon, and an icon corresponding to the first function included in the virtual object of the second shape is a 3D icon.

5. The wearable electronic device of any one of claims 2 to 4, wherein the at least one processor is further configured to:
based on receiving a third user input for adding the icon related to a second function to the virtual object of the first shape, add a 2D icon related to the second function to the virtual object of the first shape, and
based on receiving a fourth user input for adding the icon related to the second function to the virtual object of the second shape, add a 3D icon related to the second function to the virtual object of the second shape.

6. The wearable electronic device of any one of claims 2 to 5, wherein the at least one processor is further configured to:
based on approach of the virtual object of the first shape from the first area to around the second area through the second user input, replace the virtual object of the first shape with the virtual object of the second shape, and
based on the second user input being completed, fix the virtual object of the second shape in the second area.

7. The wearable electronic device of any one of claims 2 to 6, wherein the at least one processor is further configured to:
based on approach of the virtual object of the first shape from the first area to around the second area through the second user input, display a virtual object indicating that a virtual object is fixable in the second area .

8. The wearable electronic device of any one of claims 1 to 7, wherein the at least one processor is further configured to:
based on a virtual object related to a second application, that is different from a first application corresponding to the virtual object of the first shape, approaching the virtual object of the first shape in a state that the virtual object of the first shape is displayed, automatically align the virtual object corresponding to the second application in an area around the virtual object of the first shape.

9. The wearable electronic device of claim 8, wherein the at least one processor is further configured to display a virtual object indicating that the virtual object of the first shape and the aligned virtual object corresponding to the second application are grouped.

10. The wearable electronic device of any one of claims 2 to 7 and 9,
wherein the first area has a bottom shape, a wall shape, or an in-air shape, and
wherein the second area has a shape different from the first area.

11. A method for controlling a wearable electronic device, the method comprising:
based on an image obtained through a camera, analyzing a real space;
based on a result of the analyzing, obtaining a plurality of areas where a virtual object is displayable;
based on receiving a first user input for displaying a virtual object, identifying a shape of a first area among the plurality of areas;
identifying a first shape of a virtual object corresponding to the shape of the first area;
identifying at least one function related to the virtual object and corresponding to the shape of the first area; and
displaying the virtual object of the first shape including at least one icon respectively corresponding to the at least one function.

12. The method of claim 11, further comprising, based on receiving a second user input to move the virtual object of the first shape to a second area different from the first area, replacing the virtual object of the first shape displayed in the first area with a virtual object of a second shape different from the first shape and corresponding to a shape of a second area .

13. The method of claim 12, wherein at least one of the one or more icons included in the virtual object of the second shape or type of a function corresponding to the virtual object of the second shape is different from that of the virtual object of the first shape.

14. The method of claim 12 or claim 13, wherein an icon corresponding to a first function included in the virtual object of the first shape is a 2D icon, and an icon corresponding to the first function included in the virtual object of the second shape is a 3D icon.

15. The method of any one of claims 12 to 14, further comprising:
based on receiving a third user input for adding the icon related to the second function to the virtual object of the first shape, adding a 2D icon related to a second function to the virtual object of the first shape, and
based on receiving a fourth user input for adding the icon related to the second function to the virtual object of the second shape, adding a 3D icon related to the second function to the virtual object of the second shape, .
